# EUROPEAN PATENT APPLICATION

(11) **EP 4 847 278 A1**
(43) Date of publication of application: **02.12.2026**
(21) Application number: 26181429.7
(22) Date of filing: 27.05.2026
(51) Int. Cl.: B60C 23/00, B60C 23/04, B60C 23/10

(54) **A PRESSURE ADJUSTING SYSTEM**

(30) Priority: 27.05.2025 EP 25178994
(71) Applicant: Smet, Pieter-Paul, 9070 Destelbergen (BE); Al-Nahyan, Shaikh Hamad Bin Hamdan Bin Mohammad, Abu Dhabi (AE)
(72) Inventor: Smet, Pieter-Paul, 9070 Destelbergen (BE); Al-Nahyan, Shaikh Hamad Bin Hamdan Bin Mohammad, Abu Dhabi (AE); Lebrun, Maxime, 9230 Wetteren (BE)
(74) Representative: Ipsilon Belgium

(57) **Abstract**

A pressure adjusting device (10) for adjusting air pressure in an air-inflatable tire (20) defining a tire cavity (11) when being mounted on a wheel of a vehicle (21). The pressure adjusting device (10) comprises a housing (12) adapted to host at least: a valve (101), a pump (102), a pressure sensor (103), a battery (104), a sealing element (200), a controller (105) configured to instruct the pump (102) to inflate and deflate the air-inflatable tire (20), and a failure prevention system comprising one or more heat sinks (106) being adapted to dissipate heat from the housing (12), and a pressure regulating setup; and wherein the housing (12) is further adapted to be coupled to a hub of the wheel (22).

## Description

### Technical Field

The present disclosure generally relates, amongst others, to a pressure adjusting device. More particularly, it relates to a pressure adjusting device for adjusting air pressure in an air-inflatable tire defining a tire cavity when being mounted on a wheel of a vehicle. Furthermore, the present disclosure relates to a remote device for communicating with the pressure adjusting device. Additionally, the present disclosure relates to a pressure adjusting system for adjusting air pressure in air-inflatable tires of a vehicle, comprising at least one of the pressure adjusting device and the remote device.

### Background

Tires of a vehicle commonly leak slowly and unnoticeably. Underinflated tires can pose risks in vehicle handling and safety, may increase fuel consumption, reduce tire longevity and potentially increase CO₂ emission. Moreover, underinflated tires cause fleet downtime, negatively impacting vehicle performance and punctuality in transportation. Existing tire pressure management systems can partially mitigate the above problems through maintaining tire pressure within manufacturer's specification.

However, in daily life, road status and/or outside weather may change during a trip of a vehicle, which requires not only maintaining the tire pressure within the manufacturer's specification but also adapting the tire pressure to everchanging environments. In some cases, lowering tire pressure can be necessary to increase the tire's contact patch to improve traction, such as for example when the vehicle rides on rocks or gravel. Moreover, when riding on rocks or gravel, lowering the tire pressure help the wheel to conform to the uneven surface, thereby reducing vibration and wearing of the vehicle over time. As for riding on loose surfaces like sand, mud or snow, reducing tire pressure can improve floatation by increasing surface area, preventing the tires from sinking and improving grip. In contrast, when riding back to hard terrain, such as for example paved roads or highways, there is a need to inflate the tire pressure back to manufacturer's recommended tire pressure. Furthermore, when the vehicle carries a heavy load or plans to drive a long distance, it can be necessary to inflate the tire up to above the manufacturer's recommended tire pressure to support extra weight and/or to compensate for possible pressure loss during the long journey.

Most existing tire pressure management systems in vehicles require substantial modifications of the vehicle and require professional mechanics to implement them correctly. In some cases, the tire pressure management systems are for example inserted into the tire and/or in/on the chassis of the vehicle. In more advanced setups, installation may involve modifications to the axle assembly, which contains rotating components and is typically filled with lubricating oil for the differential and gears. Such modifications carry mechanical risks and may lead to the loss of the manufacturer's warranty.

### Summary

It remains challenging to proactively change tire pressure to adjust to everchanging external conditions through inflating and deflating the air-inflatable tire using conventional tire pressure maintenance systems. Most tire pressure maintenance systems are commonly based on a value set by the manufacturer's specification and function to maintain the real-time tire pressure within a range around the manufacturer's specified tire pressure. The systems are not designed to proactively achieve a tire pressure outside of a pressure range from the manufacturer's specification, wherein achieving a tire pressure outside of the manufacturer's pressure range corresponds to inflating or deflating the tire up to a tire pressure largely deviating from the range. Applying the current tire pressure maintenance systems to adapt the tire pressure to external environments, such as for example varying road conditions and weather conditions, can therefore be challenging.

It remains challenging to provide a tire pressure adjusting device independent from the vehicle. To adequately measure the tire pressure inside tire cavity, pressure sensors are typically integrated along a rim of the wheel and/or positioned inside the tire cavity. In other cases, tire pressure adjusting systems are integrated onto the axel of the vehicle, which includes unavoidable drilling to the axel of the vehicle and comprises substantially complex plumbing systems. Existing variants of tire pressure systems commonly use the air compressor and/or hoses already existing in the vehicle. These required modifications require the interventions of professional mechanics and can drive the vehicle away from its original settings and/or configurations, which can lead to a degradation in vehicle's performance. Additionally, such modifications may raise compliance concerns with vehicle safety or roadworthiness regulations, which could affect the vehicle's eligibility for road use.

It remains challenging to provide a tire pressure adjusting device which is reliable when faced with everchanging external environments. Vehicle tires are components that have close contact with foreign materials, such as for example sand, debris, mud, dust, gravel, water and/or any other possible foreign material. When the vehicle rides in extreme weather, rain and/or snow can be splashed onto the vehicle tire especially when riding at a relatively high speed. All of these situations put forward higher requirements on the sealing of the tire pressure adjusting device, which can comprise a plurality of electronic components being vulnerable to moisture and/or dust. The tire pressure adjusting device generally comprises a pump or an air compressor to inflate the tire with ambient air, which may create overpressure/under-pressure in the well-sealed tire pressure adjusting device under certain operating conditions. To ensure that the tire pressure adjusting device is sealed reliably and maintains balanced internal pressure, higher requirements are placed on the tire pressure adjusting device design. Moreover, over long periods of operation, the air compressor/the pump and/or any other components of the tire pressure adjusting device can generate substantial amount of heat. Therefore, internal thermal management, especially in relatively hot climates, presents additional challenges for a reliable tire pressure regulation system.

It remains challenging to provide a tire pressure adjusting device with large flexibility in installation and use. Ideally, the tire pressure adjusting device should have minimal compatibility requirements for the vehicle on which it is to be installed, making its use universal and independent from a vehicle model and/or brand. The tire pressure adjusting device can be readily fitted to a variety of vehicles with the least due care. Users of the vehicle can install and uninstall the tire pressure adjusting device on their own, without help from professional mechanics.

It is thus an object of embodiment of the present disclosure to propose a pressure adjusting device which avoids to a large extent, even avoids completely, the inherent shortcomings of the prior art. More specifically, it is an object of embodiment of the present disclosure to propose a pressure adjusting device for adjusting air pressure in an air-inflatable tire of a vehicle.

The scope of protection sought for various embodiments of the disclosure is set out by the independent claims.

The embodiments and features described in this specification that do not fall within the scope of the independent claims, if any, are to be interpreted as examples useful for understanding various embodiments of the disclosure.

According to a first aspect of the disclosure, a pressure adjusting device is provided. A pressure adjusting device for adjusting air pressure in an air-inflatable tire defining a tire cavity when being mounted on a wheel of a vehicle; wherein the pressure adjusting device comprises:
- a plurality of components; and
- a housing adapted to host the plurality of components, wherein the plurality of components comprises:
   ∘ a valve coupled to the tire cavity;
   ∘ a pump coupled to the tire cavity;
   ∘ a pressure sensor configured to sense a measured air pressure in the tire cavity;
   ∘ a battery adapted to power the pressure adjusting device;
   ∘ a sealing element adapted to seal the housing, thereby defining an internal cavity in the housing, wherein the internal cavity encloses air under an internal pressure;
   ∘ a controller configured to instruct the pump to pump air into the tire cavity, thereby inflating the air-inflatable tire; and further configured to instruct the valve to allow air to flow out of the tire cavity into the internal cavity, thereby deflating the air-inflatable tire; and
   ∘ a failure prevention system comprising:
      ▪ one or more heat sinks being in contact with one or more of the following: the valve, the pump, the pressure sensor, the battery, the controller; wherein each heat sink is adapted to dissipate heat from the housing; and
      ▪ a pressure regulating setup comprising:
         - a first hole extending through a thickness of a wall of the housing, thereby coupling the internal cavity to ambient air; and a barrier secured to the housing over the hole; wherein the barrier is at least partially air-permeable and adapted to equalize the internal pressure in respect to ambient pressure; and/or
         - a second hole and a third hole, both extending through a thickness of a wall of the housing, thereby coupling the internal cavity to ambient air; a first unidirectional pressure regulating valve coupled to the second hole and adapted to allow air to enter, from the second hole, the internal cavity when triggered by the internal pressure; and a second unidirectional pressure regulating valve coupled to the third hole and adapted to allow air to exit, from the third hole, the internal cavity when triggered by the internal pressure;
and wherein the housing is further adapted to be coupled to a hub of the wheel.

According to some embodiments, a pressure adjusting device can be provided. A pressure adjusting device for adjusting air pressure in an air-inflatable defining a tire cavity when being mounted on a wheel of a vehicle; wherein the pressure adjusting device may comprise:
- a housing adapted to host a plurality of components, wherein the plurality of components comprises:
   ∘ a valve coupled to the tire cavity;
   ∘ a pump coupled to the tire cavity;
   ∘ a pressure sensor configured to sense a measured air pressure in the tire cavity;
   ∘ a battery adapted to power the pressure adjusting device;
   ∘ a sealing element adapted to seal the housing, thereby defining an internal cavity in the housing, wherein the internal cavity encloses air under an internal pressure;
   ∘ a controller configured to instruct the pump to pump air into the tire cavity, thereby inflating the air-inflatable tire; and further configured to instruct the valve to allow air to flow out of the tire cavity into the internal cavity, thereby deflating the air-inflatable tire; and
   ∘ a failure prevention system comprising:
      ▪ one or more heat sinks being in contact with one or more of the following: the valve, the pump, the pressure sensor, the battery, the controller; wherein each heat sink is adapted to dissipate heat from the housing; and
      ▪ a pressure regulating setup comprising:
         - a pair of holes, also referred to as a second hole and a third hole, both extending through a thickness of a wall of the housing, thereby coupling the internal cavity to ambient air;
         - a first unidirectional pressure regulating valve coupled to one of the holes, also referred to as the second hole and adapted to allow air to enter, from the corresponding hole, also referred to as the second hole, the internal cavity when triggered by the internal pressure; and
         - a second unidirectional pressure regulating valve coupled to the other hole, also referred to as the third hole, and adapted to allow air to exit, from the corresponding other hole, also referred to as the third hole, the internal cavity when triggered by the internal pressure;
and wherein the housing is further adapted to be coupled to a hub of the wheel.

Hence, the second hole and the third hole forms the pair of holes according to the first aspect of the disclosure.

It is advantageous that the pressure adjusting device comprises a housing adapted to host a plurality of components, and the housing is sealed by the sealing element. Therefore, the present disclosure discloses the pressure adjusting device being physically rugged and able to withstand harsh wheel environment resulting from exposure to water splashes, road debris and any other possible hazard. Moreover, the pressure adjusting device is modular, which can be installed to a vehicle by being mounted on a wheel of a vehicle, more specifically by being coupled to a hub of the wheel. The pressure adjusting device can be readily mounted independently by users of the vehicle with no need or few needs from professional mechanics, with no need for complex and expensive plumbing, valve networks, pressurized fluid manifolds, modifications in vehicle's drive axles, and/or modifications in vehicle's shaft. In parallel, the pressure adjusting device can be readily uninstalled when not being used, which can remove its contribution to the vehicle's weight, then reducing fuel consumption and potentially reducing CO₂ emissions. Due to the modular feature, the pressure adjusting device can be suitable for a variety of vehicle types, vehicle models, and/or vehicle sizes, which can be advantageous in reducing manufacturing costs in customization and in effectively increasing the device's compatibility and adaptability in different countries, climates, or any other possible changing application occasion.

It is advantageous that the pressure adjusting device can inflate and deflate the air-inflatable tire as instructed by the controller. This improvement largely broadens the application occasions of the pressure adjusting device, not only in situations where rapidly increasing the air-inflatable tire pressure is necessary, but also in situations where rapidly decreasing the air-inflatable tire pressure is required. As a result, the presently disclosed pressure adjusting device provides a valid solution to proactively adjusting tire pressure according to external environment conditions with no need for the driver of the vehicle to get out of the vehicle. The air-inflatable tire pressure can be increased even above the manufacturer's recommended tire pressure when the vehicle carries a heavy load, or the user of the vehicle plans to drive a long distance to support the extra weight and/or to compensate for possible tire pressure loss during the long journey. When riding on loose surfaces, such as for example sand, mud, snow, and/or any other possible loose surface, the air-inflatable tire pressure can be decreased to improve grip, traction and floatation, and to prevent to some extent sinking. When riding on rocks or gravel, the air-inflatable tire pressure can be decreased to reduce vibration and wearing of the vehicle over time. Furthermore, when switching between different occasions, such as for example from riding on sand back to riding on hard terrain, e.g. paved roads or highways, the user of the vehicle can rapidly inflate the tire back to the manufacturer's recommended pressure.

It is advantageous that the pressure adjusting device comprises a failure prevention system allowing internal pressure regulation. As disclosed in the disclosure, the housing is sealed by the sealing element to effectively prevent dust, debris, water, and/or even moisture from entering the housing, which poses extra challenges in internal pressure management inside the housing. To overcome the possible overpressure and/or under-pressure that can happen during deflation and inflation in the internal cavity, it is advantageous that the pressure adjusting device comprises a pressure regulating setup to prevent to some extent overpressure and/or under-pressure inside the housing by allowing air to flow respectively in and out of the housing.

It is advantageous that the pressure adjusting device comprises a failure prevention system allowing internal thermal management. In operation, the components comprised by the pressure adjusting device can generate a substantial amount of heat. This heat can reduce the efficiency of electronic device and potentially decrease the lifetime and longevity of electronic device and negatively influence performance of adjacent electronic devices. To mitigate the problem, heat sinks are comprised in the system according to the present disclosure to effectively dissipate heat from the one or more components it contacts, which effectively contributes to dissipating overall heat from the housing and contributes to overall thermal management of the pressure adjusting device.

It is advantageous that the pressure adjusting device comprises a valve, preferably an electromagnetic valve to deflate the air-inflatable tire. This improvement introduces a relatively straightforward but effective method to deflate the air-inflatable tire. To rapidly deflate the air-inflatable tire, it is not necessary anymore to introduce a second pump, which may consume more energy, generate more waste heat and produce more noise and vibrations. The valve can be normally closed to maintain the measured air pressure in the tire cavity. When needed, the valve is instructed to open by the controller and allow air to flow out of the tire cavity into the internal cavity, thereby deflating the air-inflatable tire. This improvement simplifies the comprising components of the pressure adjusting device, therefore reducing relatively the production costs and the negative influence on the environment.

It is advantageous that the pressure adjusting device comprises a battery adapted to power the pressure adjusting device. As a result, the battery to power the pressure adjusting device is independent from a battery of the vehicle and the battery will not consume extra energy from the battery of the vehicle. This improvement contributes to providing the pressure adjusting device more independent from other components of the vehicle, thereby creating less influence on the vehicle with conditions set by the manufacturer compared to other conventional tire inflation systems. Having an independent battery does not create extra burden to the battery of the vehicle, which can have important functions, such as for example starting a motor vehicle, and lead to the least disturbance to the running functions of the vehicle. Moreover, this improvement effectively reduces the complex wiring from the wheel to the battery, which is normally positioned under the hood of the vehicle.

In the context of the present disclosure, the pressure adjusting device refers to a piece of equipment designed to adapt or conform the measured air pressure in the tire cavity as to new conditions being set by the user of the vehicle, such as the driver of the vehicle and/or a passenger of the vehicle. The pressure adjusting device is adapted to adjust air pressure in an air-inflatable tire defining a tire cavity when being mounted on a wheel of the vehicle. The tire cavity can be inflated with air to reach a certain level of air pressure, which is the pressure exerted in every direction by the weight of the atmosphere. Alternatively, or additionally, the pressure adjusting device can be adapted as a tire repair kit for inflating the air-inflatable tire and maintaining a desired measured air pressure as set by the manufacturer's specifications. Alternatively, or additionally, the pressure adjusting device can be adapted as a breakdown kit, such as for example as a replacement for a spare wheel in the vehicle.

Preferably, the pressure adjusting device functions when mounted on the wheel of the vehicle. The pressure adjusting device is preferably removably coupled to a rotating surface of the vehicle, such as by way of removable fasteners, such as for example nuts and bolts, screw brackets, and/or any other suitable fastener. Alternatively, the pressure adjusting device can be permanently coupled to the rotating surface, such as for example via welding, riveting, permanent fastening, and/or any other suitable means. The pressure adjusting device is preferably coupled to a rotating surface of the vehicle, such as for example rotating during vehicle locomotion. The pressure adjusting device is preferably coupled to the vehicle by way of a set of fasteners, such as for example being arranged to mate with an existing bolt pattern or a wheel hub of the vehicle.

The housing is further adapted to be coupled to a hub of the wheel. Preferably, the housing is positioned adjacent to the hubcap of the wheel, and is fastened to the wheel, such as for example via a set of lugnuts. Alternatively, the housing is contiguous with the hubcap of the wheel, and is fastened to the wheel, such as for example via a set of lugnuts. The housing is preferably substantially rigid, but can additionally or alternatively be resilient, or have any other suitable structural characteristics. The housing is preferably substantially impermeable to fluids, such as for example being waterproof, and can preferably shield the plurality of components being hosted by the housing from exposure to external liquids, such as for example water splashed onto the wheel from the road surface.

Preferably, the housing can have a regular shape, which means that all sides are equal and all inside angles are equal, such as for example a circular shape. A housing with a regular shape can create the least disturbance to the motion of the vehicle, especially when the vehicle riding at high speeds. The housing may have a shape close to a regular shape. The housing may have a shape based on a regular shape while deviating from the regular shape due to the inclusion of connection parts, such as for example parts adapted to form flange, adapted to provide space for drilling holes for bolts and nuts, and/or any other suitable situation. Preferably, a largest dimension of the housing, such as for example a diameter of the housing, a length of the housing or any other possible geometrical parameter, is smaller than the diameter of a rim of the wheel. As a result, the tire of the wheel is not in contact with the housing when the pressure adjusting device is mounted to the wheel of the vehicle. Preferably, the housing has a round shape, such that the housing has a shape of a cylinder, preferably a right cylinder, which is a solid cylinder with circular ends perpendicular to an axis of the cylinder. The height of the cylinder, which is a perpendicular distance between two bases of the cylinder, is smaller than diameter of the base of the cylinder.

The housing can have more than one part, such as for example two parts, three parts or more than three parts. The housing may comprise a cover and a bottom plate. The cover may have a shape of a right cylinder while with one base, therefore providing room to accommodate the plurality of components. The cover may have a certain thickness to maintain a certain level of mechanical strength to resist external force and to maintain shape fidelity over long periods of operation of the pressure adjusting device. The cover and the bottom plate can be fastened to each other via flange joint or any other suitable approach.

In some embodiments, the cover and the bottom plate may be provided, partially or fully, from metallic material. Hence, the housing may be a metallic housing, the cover may be a metallic cover, and the bottom plate can be metallic bottom plate. Metallic material refers to any material that predominantly comprises one or more metals, including pure metals or metal alloys, which exhibit characteristic metallic properties, such as for example electrical and thermal conductivity, malleability, ductility, and luster. Metallic material also refers to ferrous and non-ferrous metals, in addition to corrosion-resistant alloys suitable for forming structural components of a housing, of a cover, of a bottom plate, as disclosed in this disclosure. The metallic material may comprise steel, stainless steel, aluminium, aluminium alloys, galvanized iron, copper, or metal alloys such as brass or aluminium-magnesium alloys, depending on the desired mechanical strength, corrosion resistance, or weight properties.

Preferably, the housing, or the cover and the bottom plate, is provided from aluminium or aluminium-based alloy. More preferably, the housing, or the cover and the bottom plate, is provided only from aluminium-based alloy or alike. The housing, the cover, or the bottom plate can each be a one-piece integral structure made of aluminium-based alloy or alike. Additionally, the housing, the cover, or the bottom plate may comprising functional coatings to improve corrosion resistance, wear resistance, hardness, and aesethetic appeal. Such functional coatings can be coatings for aluminium or aluminium-based alloys known by the skilled person in this field.

Preferably, the cover can be manufactured by three-dimensional, 3D printing technology, more preferably, the cover can be manufactured by fused deposition modeling, FDM, or fused filament fabrication, FFF. The cover can be provided with materials comprising polylactic acid, PLA. Alternatively, the cover can comprise but not limited to one or more of the following:
- acrylonitrile styrene acrylate, ASA;
- polyamide nylon, PA-nylon;
- polycarbonates, PC;
- PC-ABS;
- polyphenylene sulfide, PPS;
- polyetherimide, PEI;

Alternatively, or additionally, the cover can be manufactured or fabricated by other manufacturing methods, such as for example injection molding, rotational molding, thermoforming, or any other suitable manufacturing or fabrication method. Alternatively, the cover comprises carbon-based composite material, metal, or any other suitable material.

Alternatively, or additionally, the cover can be manufactured or fabricated by casting material or materials comprising for example :
- plastic material, such as for example polyurethane, PU resin; epoxy resin; composite resin, such as for example carbon fiber-based resin; and any other suitable plastic material;
- metal material, such as for example aluminum, copper, iron, steel, and any other suitable metal material;
- composite material, being a material which is produced from two or more constituent materials, such as carbon-based composite materials or other common composite materials;
- any combination thereof.

Preferably, the bottom plate comprises a thermally conductive material, such as for example metal, more preferably such as for example aluminum, aluminum alloys, steel, copper, or any other suitable metal or metal alloy. Preferably, the bottom plate comprises material or materials which at least has/have characteristics of one or more of the following:
- relatively high strength-to-weight ratio;
- corrosion-resistant;
- high thermal conductivity;
- low thermal expansion;
- being sturdy;
- being durable;
- wear-resistant;

Preferably, the battery is rechargeable. More preferably, the battery has a charging port being positioned at the cover while the housing is well sealed. The charging port can be USB port, USB-C port or any other suitable charging port. Preferably, the user of the pressure adjusting device can charge the battery while the housing is well sealed, which indicates that the cover and the bottom plate are not separated from each other to expose the battery.

The pressure adjusting device may further comprise a direct current, DC-DC converter, such as for example a DC-DC converter adapted to convert 12V to 5V. For example, the DC-DC converter adapted to convert 12V to 5V can be adapted to convert a voltage of 12V from the battery to a voltage of 5V, which is a voltage required by any other electronic component of the pressure adjusting device, such as for example the controller and the pressure sensor.

Preferably, the pressure adjusting device further comprises a bus bar, which can be a metallic strip or bar that is used for power distribution in low and high voltage applications. The bus bar can have for example a 0V side and a 12V side in order to match with the 12V battery of the pressure adjusting device. Alternatively, the bus bar can have any other high voltage side, with any other high voltage value, to match with the power supply of the pressure adjusting device.

Preferably, the pressure adjusting device further comprises an on/off button, which is adapted to be a switch of the pressure adjusting device.

Preferably, the pressure adjusting device further comprises a four-channel 12V mechanical relay, which is electrically connected to the pump and the valve. Alternatively, the pressure adjusting device may comprise any other component which is adapted to be electrically operated switches; wherein the electrically operated switches open and close an electrical circuit of the pressure adjusting device by receiving electrical signals, preferably wireless signals, from outside sources; one of the outside sources can be the controller.

Alternatively and preferably, the pressure adjusting device comprises one or more printed circuit boards, PCBs, also referred to as printed wiring boards, PWBs, which can be used to electronically wire components to one another in an electronic circuit. The preferably comprised one or more PCBs may partially or fully replace the comprised bus bar.

Alternatively and preferably, the pressure adjusting device comprises one or more transistors, which is a semiconductor device used to amplify or switch electrical signals and power. The preferably comprised one or more transistors may partially or fully replace the comprised mechanical relay. The preferably comprised one or more transistors can be integrated in the preferably comprised one or more PCBs.

The valve comprised by the pressure adjusting device is coupled to the tire cavity. More specifically, the valve can be fluidically connected to the tire cavity via one or more tubes. Preferably, one end of the valve is fluidically connected to the tire cavity while the other end of the valve is fluidically connected to the internal cavity, which is the space enclosed by the housing. Preferably, the valve is an electromagnetic valve. More preferably, the valve is a closed electric air solenoid valve. The valve can be electrically connected with the controller and the battery. More specifically, the valve can be electrically connected to the battery. The valve can be energized to open and de-energized to close. The valve is normally closed, which indicates that the tire cavity is fluidically disconnected from the internal cavity via the one or more tubes, such that the measured air pressure in the tire cavity remains unchanged or with minor acceptable changes, thereby maintaining tire pressure in the air-inflatable tire. When the valve is powered, the valve subsequently opens, which indicates that the tire cavity is fluidically connected with the internal cavity via the one or more tubes, such that air in the air-inflatable tire flows via the one or more tubes towards the valve and finally into the internal cavity due to a pressure difference existing between the tire cavity and the internal cavity. Therefore, the air-inflatable tire is deflated following instructions from the controller. An inlet of the valve is a side of the valve connected to the tire cavity. An outlet of the valve is a side of the valve connected to the internal cavity of the housing .

The pump comprised by the pressure adjusting device is coupled to the tire cavity. More specifically, the pump can be fluidically connected to the tire cavity via one or more tubes. Preferably, one end of the pump is fluidically connected to the tire cavity while the other end of the pump is fluidically connected to the internal cavity, which is the space enclosed by the housing. The pump can be a 12V piston compressor being driven by a DC motor. Alternatively, the pump can be one of the following:
- diaphragm pump;
- rotary vane pump;
- gear pump;
- centrifugal pump.

The pressure sensor comprised by the pressure adjusting device is configured to sense the measured air pressure in the tire cavity. Preferably, the pressure sensor measures gauge pressure in the range of for example 0 to 60 MPa. In the present disclosure, unless otherwise explicitly indicated, when reference is made to a range, the range is to be understood inclusive. Preferably, the pressure sensor has an accuracy smaller than or equal to for example 0.03% of the full-scale range (FS). The suitable accuracy of the pressure sensor can relate to a selection of the measured gauge pressure range. The pressure sensor can be fluidically connected to the tire cavity and connected to the pump. The pressure sensor may be at least fluidically connected to the tire cavity.

The sealing element comprised by the pressure adjusting device is adapted to seal the housing, such that the housing can be waterproof, dustproof, and/or more preferably be watertight. The sealing element can be positioned between the more than one part of the housing, such that interfaces between each two of the more than one parts of the housing are properly sealed. Preferably, the sealing element is positioned between the cover and the bottom plate, such that the internal cavity in the housing is isolated from foreign materials out of the housing.

The controller comprised by the pressure adjusting device is configured to instruct the pump to pump air into the tire cavity, thereby inflating the air-inflatable tire. More specifically, the controller instructs the pump to pump air from the internal cavity into the tire cavity, while the normally-closed valve remains closed. For example, the controller is Espressif Systems 32, ESP32 microcontroller, more preferably the controller is ESP32-S2 Pico microcontroller, which is a series of low-cost, low-power system-on-chip microcontrollers with integrated Wi-Fi and dual-mode Bluetooth. Alternatively, the controller can be Arduino microcontroller, Rasberry Pi microcontroller, or any other suitable controller. The controller is further configured to instruct the valve to allow air to flow out of the tire cavity into the internal cavity, thereby deflating the air-inflatable tire. More specifically, the controller instructs the normally-closed valve to open while the pump is off, such that air flows out of the tire cavity into the internal cavity. Preferably, each of the pressure adjusting devices has a unique identification that can be addressed, such as for example a unique IP address.

The pressure adjusting device further comprises a failure prevention system. The failure prevention system comprises one or more heat sinks being in contact with one or more of the following: the valve, the pump, the pressure sensor, the battery, the controller. Alternatively, components comprised by the housing which are located adjacent to each other may share one or more heat sinks. The one or more heat sinks may be passive heat exchangers that transfer heat generated by an electronic or mechanical device to a fluid medium, usually being air or a liquid coolant, which then dissipates the heat away from the device, thereby regulating the temperature of the device. Preferably, heat sinks are connected with components comprised by the housing which are high-power components and dissipate substantial amount of heat during operation and/or components themselves are insufficient to moderate their temperatures. The surface area of the heat sinks in contact with cooling medium surrounding it, such as for example air in the internal cavity, can be maximized. Thermal adhesive and thermal paste to fill air gaps between the heat sink and the device are preferably applied to the device.

The failure prevention system further comprises a pressure regulating setup comprising a pair of holes, also referred to as the second hole and the third hole, a first unidirectional pressure regulating valve and a second unidirectional pressure regulating valve. The first unidirectional pressure regulating valve and the second unidirectional pressure regulating valve are valves which are adapted to regulate the pressures at their inlet side and their outlet side. Preferably, the first unidirectional pressure regulating valve and the second unidirectional pressure regulating valve are adapted to balance the pressures between their inlet side and their outlet side, thereby keeping the difference between the pressures at their inlet side and their outlet side under a certain range.

Preferably, the first unidirectional pressure regulating valve coupled to one of the holes, also referred to as the second hole, and adapted to allow air to enter, from the corresponding hole, also referred to as the second hole, the internal cavity, only when triggered by the internal pressure. Preferably, the second unidirectional pressure regulating valve coupled to the other hole, also referred to as the third hole, and adapted to allow air to exit, from the corresponding other hole, also referred to as the third hole, the internal cavity, only when triggered by the internal pressure. More specifically, the first unidirectional pressure regulating valve and the second unidirectional pressure regulating valve remain closed when not triggered by the internal pressure, respectively. Both the first unidirectional pressure regulating valve and the second unidirectional pressure regulating valve can have two ends, namely an inlet and an outlet. Optionally, the inlet of the first unidirectional pressure regulating valve and the outlet of the second unidirectional pressure regulating valve can be secured to the respective hole, such as for example by being inserted into the respective hole or being fluidically connected to the respective hole via one or more tubes, such that the inlet of the first unidirectional pressure regulating valve and the outlet of the second unidirectional pressure regulating valve are exposed to ambient air. Preferably, the outlet of the first unidirectional pressure regulating valve and the inlet of the second unidirectional pressure regulating valve remain unconnected and exposed to the internal cavity.

Alternatively, the inlet of the second unidirectional pressure regulating valve remains unconnected while the outlet of the first unidirectional pressure regulating valve is connected to:
- a component in the housing; or
- an inlet of the pump.

Alternatively, the outlet of the first unidirectional pressure regulating valve remains unconnected while the inlet of the second unidirectional pressure regulating valve is connected to:
- a component in the housing; or
- an outlet of the valve.

Alternatively, the outlet of the first unidirectional pressure regulating valve is connected to an inlet of the pump and the inlet of the second unidirectional pressure regulating valve is connected to an outlet of the valve. Alternatively, the inlet of the pump is fluidically connected to one of the holes, also referred to as the second hole, while the first unidirectional pressure regulating valve is positioned between the inlet of the pump and the corresponding hole, also referred to as the second hole; and the outlet of the valve is fluidically connected to the other hole, also referred to as the third hole, while the second unidirectional pressure regulating valve is positioned between the outlet of the valve and the corresponding other hole.

It is clear that one or more features of the above-mentioned alternatives may be combined with one or more features of other above-mentioned alternatives.

According to some embodiments, at least one of the one or more heat sinks can be in contact with the pump.

Preferably, one of the one or more heat sinks is in contact with the pump. Alternatively, more than one of the one or more heat sinks are in contact with the pump. It is advantageous to have at least one heat sink in contact with the pump, because this improvement improves heat management and efficiency of the pressure adjusting device. Firstly, the heat sink prevents to some extent overheating. When the pump operates, it generates heat due to mechanical friction and compression of air. Overheating could lead to reduced performance, increased wear, or even failure of the pump over time. The heat sink being in contact with the pump helps to absorb and dissipate heat, thereby preventing to some extent the pump from overheating. Secondly, the heat sink contributes to improving efficiency of the pump by helping maintain optimal operating conditions of the pump. Pumps running at high temperatures can lead to a loss of efficiency, thereby requiring more energy for proper operation. As a result, keeping the pump cooler allows it to function more efficiently, thereby potentially saving power. Thirdly, the heat sink can help extend pump life. Heat is one of the main factors that can degrade components of the pump. By maintaining a lower temperature with the heat sink, the pump's internal components, such as for example sealing element, bearings, and the motor may experience less thermal stress, thereby leading to a longer operational lifespan.

Preferably, thermal paste and/or thermal adhesive is applied between the pump and one or more heat sinks in contact, in order to reduce as much as possible the possible gap between the pump and the one or more heat sinks, such that the heat from the pump can be efficiently and sufficiently conducted from the pump to the heat sink.

According to some embodiments, the one or more heat sinks may comprise a thermally conductive material.

Preferably, the one or more heat sinks comprise a thermally conductive material, which has high heat capacity and thermal conductivity in order to absorb more heat energy without shifting towards a very high temperature and transmit it to the environment for efficient cooling. Preferably, the one or more heat sinks comprise aluminium and/or aluminium alloys, such as for example Aluminium alloys 6060, 6061, and 6063. Alternatively, the one or more heat sinks comprise copper. Alternatively, the one or more heat sinks comprises aluminium alloys and copper.

It is advantageous that the one or more heat sinks may comprise a thermally conductive material, because the improved heat transfer efficiency can subsequently reduce the size of the heat sink, thereby reducing material costs and contributing to minimizing size of electronic components and their ancillary components.

According to some embodiments, the first unidirectional pressure regulating valve and the second unidirectional pressure regulating valve can be self-actuated and can be adapted to limit the internal pressure within a preset internal pressure range; and wherein atmospheric pressure can be comprised within the preset internal pressure range.

It is advantageous that the first unidirectional pressure regulating valve and the second unidirectional pressure regulating valve can be adapted to limit the internal pressure within a preset internal pressure range, thereby preventing to some extent the pressure adjusting device from failure due to abnormal internal pressures inside the housing. Under-pressure inside the housing can happen when inflating the tire cavity, because the inlet of the pump is fluidically connected to the internal cavity in the housing, such that a large amount of air in the internal cavity flows from the internal cavity towards the tire cavity.

In addition, overpressure inside the housing can happen when deflating the tire cavity, because the outlet of the valve is fluidically connected to the internal cavity in the housing, such that a large amount of air in the tire cavity flows from the tire cavity towards the internal cavity. The possible under-pressure and overpressure situations in the internal cavity of the housing can challenge the proper functioning of the sealing element of the housing, which can subsequently lead to wearing of the sealing element and reduce the lifetime of the sealing element. Moreover, abnormal internal pressure in the housing can challenge the proper functioning of other components inside the housing. In addition, in the absence of the first unidirectional pressure regulating valve and the second unidirectional pressure regulating valve, the pressure adjusting device cannot inflate the tire, as under-pressure would prevent the pump from operating normally. Therefore, it is advantageous that the internal pressure can be limited safely within a preset internal pressure range.

By comprising the unidirectional pressure regulating valves in the pressure adjusting device, preferably, the internal pressure of the housing can be maintained around the atmospheric pressure, which can slightly or permissibly deviate from the atmospheric pressure within a preset internal pressure range. The atmospheric pressure is comprised within the preset internal pressure range, meaning that the internal pressure of the housing can be higher than and/or lower than the atmospheric pressure, such that slight under-pressure and/or overpressure is allowed for the functioning of the pressure adjusting device. The preset internal pressure range can be decided by considering the sealing level of the housing, the vulnerability of the other components in the housing, the requirements from the pump, and/or any other possible influencing factors. The unidirectional pressure regulating valves are self-actuated, which do not need any auxiliary power to drive the valve. The unidirectional pressure regulating valves operate the valves themselves through medium energy, such as for example through air energy due to the pressure difference between the inlet and the outlet of the valve. The preset internal pressure range can be in the range from 80 kPa to 120 kPa, preferably in the range from 100.5 kPa to 102.1 kPa. In addition to suitable sensitivity and responsiveness, preferably, the unidirectional pressure regulating valves are selected to prevent accidental opening of the valves when the pressure adjusting device is partially or completely submerged in water, which may occur when the corresponding vehicle is crossing a body of water.

According to some embodiments, the first unidirectional pressure regulating valve can be adapted to bring the internal pressure above a first internal pressure threshold by allowing air to enter the internal cavity via the corresponding hole; and wherein the second unidirectional pressure regulating valve can be adapted to bring the internal pressure below a second internal pressure threshold by allowing air to exit the internal cavity via the corresponding other hole.

It is advantageous to comprise two unidirectional pressure regulating valves in the pressure adjusting device, because this can prevent to some extent both under-pressure and overpressure that can occur inside the housing, thereby preventing to some extent failures due to abnormal internal pressure, contributing to maintaining optimal operating conditions of the components inside the housing, and ultimately contributing to long-term optimal operation of the pressure adjusting device.

Preferably, the first unidirectional pressure regulating valve is adapted to prevent under-pressure inside the housing to some extent, by allowing air to enter the internal cavity, thereby bringing the internal pressure above the first internal pressure threshold and limiting the internal pressure within the preset internal pressure range. Preferably, the second unidirectional pressure regulating valve is adapted to prevent overpressure inside the housing to some extent, by allowing air to exit the internal cavity, thereby bringing the internal pressure below the second internal pressure threshold and limiting the internal pressure within the preset internal pressure range. The unidirectional pressure regulating valves remain closed when not being activated. When the internal pressure is lower and falls out of the preset internal pressure range, the first unidirectional pressure regulating valve is open to let air enter the internal cavity of the housing from ambient outside. In addition, when the internal pressure is higher and falls out of the preset internal pressure range, the second unidirectional pressure regulating valve is open to let air exit the internal cavity of the housing into the ambient outside. The preset internal pressure range can be in the range from 80 kPa to 120 kPa, preferably in the range from 100.5 kPa to 102.1 kPa.

According to some embodiments, the first unidirectional pressure regulating valve and the second unidirectional pressure regulating valve can be two check valves; and wherein the two check valves may have two opposite air flow directions.

Preferably, the first unidirectional pressure regulating valve and the second unidirectional pressure regulating valve are check valves, which allows air to flow in one direction and prevents any flow in the reverse direction. Preferably, the first unidirectional pressure regulating valve allows air flow from the ambient outside into the internal cavity of the housing and the second unidirectional pressure regulating valve allows air flow from the internal cavity of the housing to the ambient outside, thereby having two opposite air flow directions. The two check valves can be identical, or the two valves can be different from each other. The check valve can be selected according to a pressure rating inside the housing, which is reflected by specific pressure setpoints at which the check valve opens. In addition, the check valve can be selected based on at least one or more of the following parameters:
- flow capacity, in order to ensure an appropriate air flow rate to ensure the tire inflates properly within a set time;
- response time, in order to open or close promptly as soon as the internal pressure exceeds or falls below a certain threshold;
- size and fitting, in order to match the size and type of connections used in the pressure adjusting device.

Alternatively, the pressure regulating setup may comprise: a first hole extending through a thickness of a wall of the housing, thereby coupling the internal cavity to ambient air; and a barrier secured to the housing over the hole; wherein the barrier is at least partially air-permeable and adapted to equalize the internal pressure in respect to ambient pressure.

In some embodiments, the pressure regulating setup may comprise both:
- a first hole extending through a thickness of a wall of the housing, thereby coupling the internal cavity to ambient air; and a barrier secured to the housing over the hole; wherein the barrier is at least partially air-permeable and adapted to equalize the internal pressure in respect to ambient pressure; and/or
- a second hole and a third hole, both extending through a thickness of a wall of the housing, thereby coupling the internal cavity to ambient air; a first unidirectional pressure regulating valve coupled to the second hole and adapted to allow air to enter, from the second hole, the internal cavity when triggered by the internal pressure; and a second unidirectional pressure regulating valve coupled to the third hole and adapted to allow air to exit, from the third hole, the internal cavity when triggered by the internal pressure.

In this context of this disclosure, "extending through a thickness of a wall of the housing" refers to a passage, opening, or hole that traverses the wall from an inner surface facing the internal cavity to an outer surface exposed to ambient surroundings, such that a continuous flow path is provided between the internal cavity and the exterior of the housing. Under this configuration, the hole fluidly couples the internal cavity to the ambient air outside the housing. According to some embodiments, a barrier may be secured to the housing so as to cover the hole and to block a direct, open passage between the internal cavity and the ambient air. The barrier may be fixed to the housing by any suitable means, such as for example adhesive bonding, mechanical clamping, overmolding, welding, or combinations thereof, to ensure fluid-tight connection around the perimeter of the hole. The barrier is at least partially air-permeable, meaning that, under normal operating conditions, gas/vapor, such as for example air, water vapor, can pass through the barrier between the internal cavity and the ambient environment, while the barrier substantially prevents the ingress of liquid water, such as for example water droplets, and contaminants, such as for example dust, dirt, and splashes. The barrier may comprise a porous or microporous membrane having a gas-permeable and/or vapor-permeable, but liquid-impermeable structure. Due to its gas-permeability or air-permeability or vapor-permeability, the barrier is adapted to allow pressure equalization between the internal cavity and the ambient environment. In particular, when a pressure difference arises between the internal pressure in the internal cavity and the ambient pressure, air can flow through the barrier so that the internal pressure is driven toward the ambient pressure, thereby reducing or substantially eliminating the pressure difference. In this way, pressure variations due to, such as for example temperature changes or operation of internal components can be relieved, thereby reducing stress on the housing and the sealing element. In some embodiments, the barrier comprises a waterproof and breathable member, such as for example a microporous polytetrafluoroethylene, PTFE film, a Gore-Tex^{®}-type membrane. Such membranes are configured to permit the passage of air and water vapor while substantially preventing penetration of liquid water.

The provision of a barrier in the form of a waterproof, breathable membrane directly over the housing hole enables the use of a comparatively large, unobstructed membrane area, thereby significantly increasing the effective gas-permeable surface and allowing faster air communication between the internal cavity and the ambient environment. Such arrangement is distinct from integrating membrane into a discrete filter or valve element and thus constrained to a limited active area, the present configuration permits rapid pressure equalization even under steep or frequent pressure transients, reducing mechanical stress on the housing and internal components.

According to some embodiments, the housing may further comprise a separate cover plate; and wherein the separate cover plate may be adapted to be coupled to the housing to cover the first hole; and wherein, in a mounted state of the separate cover plate, the separate cover plate may be spaced apart from an outer surface of the housing to form at least one air passage between the separate cover plate and the barrier; and wherein the at least one air passage may be configured to allow ambient air to enter or exit the internal cavity through the barrier, when triggered by the internal pressure in the internal cavity.

The separate cover plate, spaced from the housing to form at least one air passage, protects the barrier from direct mechanical impact, stone chipping, and splash water while still permitting effective gas exchanges. Additionally, the spacing and air passage can promote continuous or intermittent cross-flow across the outer side of the barrier, enhancing evaporation of any moisture that does reach it. This improvement supports faster recovery of air-permeability after exposure to water or mud, which is particularly relevant in a rotating wheel environment where intermittent high humidity and splashing occur. Furthermore, the cover plate and gap can act to attenuating noise generated in the pressure adjusting device, which is not achieved by a barrier alone.

Preferably, the housing may further comprise a separate cover plate, which is a distinct component from the housing and from the barrier. The separate cover plate may be adapted to be coupled to the housing so as to at least cover the first hole and the barrier arranged over the first hole. Optionally or additionally, the separate cover plate is adapted to extend over additional areas of the housing adjacent to the first hole. In the present context, "cover" is to be understood as positioning the separate cover plate such that its protective influence, such as for example shielding the barrier and/or adjacent regions from contaminants, mechanical impact, or splash water, extends to the respective component or area. The coupling may be achieved by any suitable fastening means, such as for example screws, clips, snap-fit elements, crimping, welding, adhesive bonding, or overmolding. In a mounted state, the separate cover plate is positioned at a distance from an outer surface of the housing such that a gap is formed between the separate cover plate and the barrier, the gap defining at least one air passage extending laterally between an outer edge region of the cover plate and the housing. The at last one pair passage is configured to provide a flow path for ambient air to reach the barrier and, through the barrier, to enter or exit the internal cavity, such that when a pressure exists between the internal pressure in the internal cavity and the ambient pressure, this pressure difference drives air flow through the air passage and across the barrier to equalize the pressures.

According to some embodiments, the separate cover plate may be spaced apart from an outer surface of the housing to form one air passage between the separate cover plate and the barrier, wherein the air passage goes all around the separate cover plate, i.e. all along a perimeter of the separate cover plate.

According to some embodiments, the separate cover plate may be spaced apart from an outer surface of the housing to form more than one air passages between the separate cover plate and the barrier.

Preferably, the separate cover plate may be spaced apart from an outer surface of the housing to form more than one air passages between the separate cover plate and the barrier, such as for example two, three, four, five, six, seven, eight, nine, ten, eleven, twelve, thirteen, fourteen, fifteen, sixteen, seventeen, eighteen, nineteen, twenty or more than twenty air passages. Providing more than one air passage between the separate cover plate and the barrier increases the total effective flow cross-section, thereby enabling faster and more reliable pressure equalization between the internal cavity and the ambient environment. In addition, the multiple passages introduce redundancy so that, even if one passage is partially blocked by dirt or ice, sufficient airflow can still be maintained through the remaining passages, improving robustness in harsh operating conditions.

According to some embodiments, the more than one air passages between the separate cover plate and the barrier may be distributed along a perimeter of the separate cover plate.

The more than one air passages are distributed along a perimeter of the separate cover plate, meaning that the air passages are arranged at multiple positions around an outer edge region of the separate cover plate, in particular circumferentially spaced apart from each other along at least a portion of the contour of the separate cover plate. In this manner, the air passages are not concentrated in a single localized area but are provided at different angular positions around the perimeter, so that ambient air can access the barrier or exit from the barrier from various directions.

Distributing multiple air passages along the perimeter of the separate cover plate promotes more uniform pressure equalisation and ventilation across the enclosed space, reducing local pressure peaks and protecting the related components exposed to these local pressure peaks, thereby improving the reliability of the pressure adjusting device.

According to some embodiments, the more than one air passages between the separate cover plate and the barrier may be in fluid communication with each other.

Preferably, the more than one air passages are fluidly connected such that a fluid, such as for example air or gas, can flow between them. In other words, there is no sealed separation between the air passages, so that pressure or fluid present in one passage can be transmitted to the others. Preferably, the more than one air passages form a single, continuous air passage extending between the separate cover plate and the barrier, which is locally constricted or subdivided by coupling means configured to couple the separate cover plate to the outer surface of the housing, such as for example screw pillars, clips, or other fastening structures.

According to some embodiments, the barrier may comprise a plurality of pores extending through a thickness of the barrier.

Preferably, the barrier may comprise a plurality of pores extending through a thickness of the barrier, i.e. a multiplicity of passages that traverse the barrier from a first surface facing the internal cavity to an opposite second surface facing the ambient environment, thereby providing gas-permeable flow paths between the internal cavity and the ambient air. The pores may be formed by a microporous or nanoporous structure of the barrier material, and are dimensioned such that air and/or water vapor can pass through them under normal operating conditions, while liquid water and particulate contaminants are substantially prevented from passing through.

According to some embodiments, the barrier may comprise one or more polymer-based materials.

Preferably, the barrier may comprise two, three, four, or more than four polymer-based materials. The barrier may comprise one or more polymer-based materials, such as for example expanded polytetrafluorethylene, ePTFE, which is processed to form a microstructure that is permeable to air and/or water vapor while remaining substantially impermeable to liquid water. The barrier, such as for example the membrane, may be provided as a composite multilayer material in which the ePTFE layer is supported by a non-woven or woven polymer support layer, such as for example a polypropylene, PP, or polyethylene terephthalate, PET fabric, thereby improving the mechanical robustness of the barrier under pressure fluctuations and movement.

In some embodiments, the barrier comprises a microporous membrane having a plurality of pores with characteristic pore sizes in a range from about 0.05 µm to about 200 µm, such as for example in a range from about 0.08 µm to about 150 µm, even in a range from about 0.1 µm to about 50 µm, preferably chosen such that air molecules and water vapor can pass through the barrier under normal operating conditions, whereas liquid water and particulate contaminants are substantially prevented from passing. The thickness of the barrier, such as for example a membrane, may be on the order of a few tenths of a millimetre, such as for example 0.2 mm. Other thicknesses may be used depending on the required mechanical strength and permeability.

The barrier, such as for example a membrane, may exhibit a gas permeability in a range suitable for pressure equalization according to the present disclosure. For example, depending on the specific membrane type and protection rating, IP rating, such as for example IP66 or IP67, the air permeability may be in a range from about 300 ml/cm²/min to 6000 ml/cm²/min at a pressure difference of 7kPa, more preferably in a range from about 1000 ml/cm²/min to 4000 ml/cm²/min at a pressure difference of 7kPa. By appropriately selecting the permeability and the effective membrane surface area, such as for example a surface area of approximately 85 cm² corresponding to a usable diameter of about 12 cm to 14 cm, a desired flow rate and pressure-equalization response time can be achieved without adversely affecting the operation of the pressure adjusting device.

In some embodiments, the barrier comprises a composite membrane comprising an ePTFE layer and at least one polymer support layer. The support layer may be formed by a non-woven or woven fabric comprising polymer-based material, such as for example PP or PET, which does not obstruct the air flow through the pores of the ePTFE layer by provides improved mechanical stability and handling properties. The support layer may be bonded to the ePTFE by, such as for example, point bonding or thermal fusion bonding. In point bonding, a pattern of discrete bonding points is used to press the ePTFE onto the support fabric, whereas in thermal fusion bonding a thermoplastic support layer is at least locally melted and pressed into the porous microstructure of the ePTFE, thereby anchoring the layers together. The thus obtained composite multilayer material combines the breathability and waterproof properties of ePTFE with the mechanical robustness of the support layer.

The composite polymer-based barrier material can advantageously be joined to the housing by welding techniques, such as for example thermal welding, laser welding or ultrasonic welding, thereby forming a substantially leak-tight seal between the barrier and the housing around the first hole. Alternatively or additionally, a gasket-based attachment may be used. The use of a bonded composite membrane facilitates reliable sealing over a comparatively large surface area, while maintaining the required gas permeability and water tightness.

According to some embodiments, the pressure adjusting device may further comprise fixation means coupled to the housing; wherein the fixation means may be adapted to couple the housing to the hub of the wheel.

It is advantageous for the pressure adjusting device to comprise fixation means that securely attach it to the hub of the wheel, making the pressure adjusting device independent of the vehicle's system and modular in design. This allows the pressure adjusting device to be easily mounted, dismounted, or transferred between different wheels without the need for professional mechanics, depending on specific requirements. Additionally, this improvement significantly enhances the device's versatility and universality. There is no need for substantial modifications to the pressure adjusting device to accommodate various vehicle types. In contrast, the pressure adjusting device can be simply adapted by customizing the fixation means to suit the specific vehicle. This reduces customization costs and broadens the potential applications of the pressure adjusting device.

Preferably, the fixation means is removably coupled to the housing. More specifically, the fixation means is removably coupled to a side of the housing facing the hub of the wheel. The fixation means can be coupled to the housing by way of removable fasteners, such as for example nuts and bolts, screw brackets, belts and buckles and/or any other suitable fastener. Additionally, the fixation means can be removably coupled to the hub of the wheel by way of a set of fasteners, such as for example being arranged to mate with an existing bolt pattern or a wheel hub of the vehicle. The fixation means can be a single piece. Alternatively, the fixation means may comprise more than one part while the more than one parts are mutually connected, fastened, or secured, thereby forming an integral fixation means. The fixation means are preferably provided with materials with at least one or more of the following properties:
- high strength and durability, such as for example high tensile strength to withstand the mechanical stress and forces encountered during vehicle operation;
- corrosion resistant, such as for example in environments with exposure to moisture, road salts, and/or any other corrosive agents, to maintain its integrity and performance over time;
- impact resistant, such as for example being capable of absorbing shock and impact forces without cracking or deforming, thereby ensuring long-term reliability even under harsh conditions;
- wear resistant, in order to prevent degradation over time due to possibly constant motion and friction between the fixation means and the wheel hub, and/or between the fixation means and the housing;
- lightweight, in order to minimize the overall weight of the pressure adjusting device, thereby creating minimal disturbance to the vehicle;
- fatigue resistant, in order to withstand cyclic loading and unloading;
- being resistant to environmental factors, such as for example UV radiation, temperature fluctuations, exposure to chemicals, water, snow, gravels, sands, and/or any other possible environmental factor.

The fixation means may comprise one or more of the following:
- aluminium alloy;
- stainless steel;
- titanium alloy;
- carbon steel;
- high-strength Nylon, polyamide;
- bronze or brass alloy.

Preferably, the pressure adjusting device is securely fixed to the hub of the wheel, in particular as meaning that it remains firmly attached to the vehicle wheel at a speed of up to, for example, 150 km/h, even if the vehicle wheel is exposed to vibrations or lateral accelerations.

According to some embodiments, a center of mass of the plurality of components in the housing may be positioned at a geometrical center of the housing, thereby allowing inflation or deflation of the air-inflatable tire while the vehicle is static and while the vehicle is driving.

It is advantageous that the center of mass of the plurality of components in the housing is positioned at a geometrical center of the housing. Firstly, this improvement ensures a uniform distribution of weight within the pressure adjusting device, thereby reducing the risk of vibrations or unwanted shifting of components during operation, especially when the vehicle is moving. In addition, the strain on individual parts can be effectively reduced, thereby resulting in prolonged lifespan and reduced maintenance needs. Secondly, this improvement leads to improved dynamic performance of the pressure adjusting device. By placing the center of mass at the geometrical center of the housing, the forces acting on the device during the vehicle's motion, such as for example turns, braking, or accelerations, can be more evenly distributed. This helps to maintain smoother tire inflation and deflation processes, even when the vehicle is in motion. Thirdly, this improvement minimizes the impact on the vehicle's motion by introducing the pressure adjusting device, thereby reducing the likelihood of additional vibrations or disturbances during operation.

The pressure adjusting device as disclosed in this disclosure can be adapted to inflate or deflate the air-inflatable tire while the vehicle is static and also while the vehicle is moving. This improvement is advantageous to eliminate the need to park the vehicle and reduce downtime. It is not mandatory for the driver or a passenger of the car to come out of the car to manually adjust the pressure in the tires of the vehicle, thereby improving human safety and comfort.

In order to implement this technical feature, the mass and relative distance of each component within the housing to the geometrical center are recorded. The locations of the components within the housing are thereafter shifted until the center of mass of the plurality of components is located at the geometrical center of the housing. Alternatively, the center of mass of the plurality of components can be located at least very close to the geometrical center of the housing. The above stated process can also be realized by programming, by modelling, by software, by artificial intelligence, and/or any other suitable method.

The plurality of components preferably can be positioned at designated locations aided by a 3D printed bracket. The components can be further fixed to the designated locations via other removable fasteners, such as bolts and nuts, screws, and/or any other suitable removable fasteners. Alternatively, or additionally, the components can be permanently fixed to the designated locations via such as for example gluing, welding, and/or any other suitable securing method. The 3D printed bracket can comprise plastics. Alternatively, the bracket can be manufactured or fabricated with other suitable methods, such as for example injection molding, rotational molding, thermoforming, casting material or materials comprising:
- plastic material, such as for example polyurethane, PU resin; epoxy resin; composite resin, such as for example carbon fiber-based resin; and any other suitable plastic material;
- metal material, such as for example aluminum, copper, iron, steel, and any other suitable metal material.

According to some embodiments, the housing can be further adapted to host a communication interface configured to receive one or more control signals for the controller, thereby allowing remote control of the pressure adjusting device.

The communication interface preferably allows two devices to exchange information and interact with each other. More specifically, the communication interface can comprise protocols, standards, and physical connections that enable communication between devices. Preferably, the communication interface is wireless network interface, such as for example Bluetooth, Bluetooth Low Energy, BLE, and/or Wi-Fi.

It is advantageous that the pressure adjusting device can be remotely controlled. Conventional tire inflating systems are known. The on/off buttons/switches and/or the screen/button to set/tune the tire pressure are generally located at the tire inflating system, which is located adjacent to the vehicle wheel. By remotely controlling the pressure adjusting device, the driver does not need to get out of the vehicle to turn on or turn off the pressure adjusting device. This contributes to improved driving efficiency and driver comfort, especially in extreme weather conditions or road conditions, such as deserts. Moreover, the driver stays not necessarily close to or even inside the vehicle when inflating/deflating the tire. In contrast, the pressure adjusting device can be instructed remotely, even up to such as for example 20 meter away from the pressure adjusting device.

The control signals can be from a smartphone, a wireless tablet, a laptop, a central on-board diagnostics, OBD module or other phone or mobile device. Alternatively, the control signals can be emitted from a central server to a cellular tower via a wide area network and subsequently transmitted from the cellular tower directly to the communication interface. Alternatively, or additionally, the control signals can be emitted from a central server to a cellular tower via a wide area network, transmitted to a phone or mobile device, such as for example a smartphone, and subsequently transmitted to the communication interface. The one or more control signals can be received by the communication interface and then transmitted to the controller.

The related phone or mobile device preferably comprises a transceiver, such that the signals can be transmitted to the communication means and received from the communication means, preferably wirelessly, via such as for example Bluetooth, BLE, and/or Wi-Fi. Alternatives of the related phone or mobile device can be a screen inside the vehicle or other dashboard display of the vehicle. The pressure adjusting device can have a related application adapted to proactively allow the monitoring of the tire pressure to maintain and/or achieve certain tire pressures. The related application can be installed in the phone or mobile device. Alternatively, or additionally, the related application can be installed in a related in-car operating system, such that the related application can be utilized via the screen inside the vehicle or other dashboard display of the vehicle.

The control signals transmitted by the related phone or mobile device or the in-car screen/dashboard to the communication means can be user-defined target air pressure in each of the tire cavity; a selected road condition, such as for example sand, gravels, mud, paved road, or any other possible road condition; an entered external temperature out of the vehicle; an entered loading of the vehicle and/or any other related information.

The related phone or mobile device or the in-car operation system may utilize artificial intelligence, Al, in decision making, such as for example calculating a suitable measured tire pressure in the tire cavity by considering the selected road condition, the entered external temperature out of the vehicle, the entered loading of the vehicle, and/or any other related information. AI can help automatically maintain the suitable measured tire pressure in the tire cavity by triggering the controller to inflate or deflate the air-inflatable tire. AI may help decide a suitable inflating or deflating rate within a preset inflating or deflating time limit, such that the related energy consumption can be minimized. As a result, the control signals can be processed by Al before being transmitted to the communication interface.

According to some embodiments, the pressure adjusting device can be coupled to the tire cavity of one of the wheels of the vehicle, such that the measured air pressure in the tire cavity of the corresponding air-inflatable tire can be remotely controlled through the communication interface.

The pressure adjusting device is positioned in close proximity to the tire cavity of one of the wheels of the vehicle via the fixation means as disclosed in the present disclosure. Additionally, the pressure adjusting device is fluidically connected to the tire cavity of one of the wheels of the vehicle, such as via the corresponding tire's stem valve. Therefore, the pressure adjusting device can be coupled to the tire cavity of one of the wheels of the vehicle. Furthermore, this improvement illustrates that the tire cavity of one wheel can be individually and independently controlled by the corresponding coupled pressure adjusting device. This improvement increases the flexibility in tire pressure control and potentially reduces the energy consumption in balancing tire pressure among all four tire cavities of a vehicle.

As disclosed in the present disclosure, the control signals can be received by the communication interface and then be transmitted to the controller. According to the control signals, the controller can instruct the pump to inflate the air-inflatable tire or instruct the valve to deflate the air-inflatable tire. Therefore, the measured air pressure in the tire cavity of the corresponding air-inflatable tire can be remotely controlled through the communication interface.

According to some embodiments, the control signals may comprise a user-defined target pressure for the tire cavity; and wherein the controller may be further configured to instruct the pump to pump air into the tire cavity until the pressure sensor senses the measured air pressure in the tire cavity corresponds to the user-defined target pressure; and wherein the controller may be further configured to instruct the valve to allow air to flow out of the tire cavity until the pressure sensor senses the measure air pressure in the tire cavity corresponds to the user-defined target pressure; thereby achieving and/or maintaining the user-defined target pressure.

The user may define a target tire pressure, namely the user-defined target pressure for the tire cavity, which can be transmitted to the communication interface and then to the controller. The user-defined target pressure can be different from the manufacturer's recommended pressure and can be determined by considering the road conditions, external weather conditions, vehicle's loading, and/or any other possible factor. The user-defined target pressure and the measured air pressure in the tire cavity can be compared by the controller. If the user-defined target pressure is higher than the measured air pressure in the tire cavity, the controller can instruct the pump to increase the air pressure in the tire cavity until reaching the user-defined target pressure. If the user-defined target pressure is lower than the measured air pressure in the tire cavity, the controller can instruct the valve to decrease the air pressure in the tire cavity until reaching the user-defined target pressure. Therefore, the user-defined target pressure for the tire cavity can be achieved. After achieving the user-defined target pressure for the tire cavity or if the user-defined target pressure is equal to the measured air pressure in the tire cavity, the controller may instruct the pump to stop functioning or the valve to close, such that the user-defined target pressure for the tire cavity can be maintained. Alternatively, there can be a continuous leakage happening in one or more of the tires of the vehicle, the controller may instruct the pump to continuously pump air into the tire cavity, such that the user-defined target pressure for the tire cavity can be maintained.

According to some embodiments, the controller can adjust the measured air pressure in the tire cavity to the user-defined target pressure with a resolution equal to or finer than 3 psi.

According to some embodiments, the controller may be configured to determine a difference between the user-defined target pressure and the measured air pressure in the tire cavity, and to initiate an adjustment operation when the difference is greater than or equal to 3 psi. More specifically, the controller may be configured to compare the user-defined target pressure with the measured air supply or discharge such that an adjustment process is performed only if the deviation between the user-defined target pressure and the measured air pressure is greater than or equal to 3 psi. Hence, the first aspect of the disclosure may additionally relate to a method for adjusting air pressure in a tire cavity using the pressure adjusting device according to some embodiments. The method for adjusting air pressure in a tire cavity using the pressure adjusting device comprising:
- receiving a user-defined target pressure;
- measuring an air pressure in the tire cavity; and
- adjusting the air pressure in the tire cavity when the user-defined target pressure deviates by more than or equal to 3 psi from the measured air pressure.

The controller may compare the measured air pressure in the tire cavity and the user-defined target pressure. If the absolute difference between the measured air pressure in the tire cavity and the user-defined target pressure is larger than 3 psi, the controller may instruct the pump to inflate the tire cavity or instruct the valve to deflate the tire cavity.

It is advantageous to maintain a relatively high pressure adjusting resolution, thereby allowing for better discrimination between different pressure levels. Therefore, the measured air pressure in the tire cavity can be fine-tuned or even optimized according to more complex situations compared to the basic inflation and deflation functions. As disclosed in the present disclosure, proactively adjusting tire pressure according to road conditions, weather conditions, vehicle's loadings and/or other possible condition can be advantageous over the known tire pressure management systems. The more influencing parameters are involved in actively adjusting the tire pressure, the higher the requirements for the tire pressure adjustment resolution. Therefore, the relatively high pressure adjusting resolution improves tire longevity, vehicle performance and potentially reduces energy consumption of the vehicle.

According to some embodiments, the user-defined target pressure may deviate by more than or equal to 3 psi from the measured air pressure in the tire cavity.

It is advantageous to adjust the tire pressure to a large extent even when the user-defined target pressure deviates by more than or equal to 3 psi from the measured air pressure in the tire cavity. Compared to known tire pressure management systems that focus on maintaining tire pressure by keeping the measured air pressure in the tire cavity within or equal to 3 psi of the manufacturer's tire pressure specification, this improvement creates more possibilities to actively adjust tire pressure based on various conditions, such as road, weather, vehicle load or any other possible condition. The optimal tire pressure when driving on sand can be very different from the optimal tire pressure when driving on gravel, and the difference between the two can be much greater than 3 psi, even can be 10 psi for off-road vehicles. The improvements disclosed in this disclosure can well cope with the challenges faced by the drivers in the ever-changing driving conditions. The tire pressure adjusting may not be restricted by the manufacturer's tire pressure specification, which can be already set in the tire pressure adjusting device for a specific type of vehicle. Instead, the tire pressure adjusting device disclosed in the present disclosure offers more freedom in actively fitting to the ever-changing driving conditions.

The user-defined target pressure is transmitted to the communication interface and then subsequently transmitted to the controller. The controller may compare the measured air pressure in the tire cavity and the user-defined target pressure to instruct the pump or to instruct the valve or instruct the pressure adjusting system to maintain the measured air pressure in the tire cavity.

According to some embodiments, a remote device for communicating with the pressure adjusting device is provided. The remote device may comprise:
- a user interface configured to receive the user-defined target pressure for the tire cavity;
- a signal generator configured to generate one or more control signals comprising the user-defined target pressure; and
- a transmitting unit configured to transmit the one or more control signals to the communication interface.

It is advantageous to provide a remote device for communicating with the pressure adjusting devices. In addition to being able to adjust tire pressure inside the vehicle via the on-board dashboard/screen fixed to the interior of the vehicle, users can flexibly adjust tire pressure both inside and outside the vehicle.

The remote device can be a remote, a remote control, a smartphone, a wireless tablet, a laptop, a smart watch, or any other similar remote device. Preferably, the user interface configured to receive the user-defined target pressure for the tire cavity comprises a touchscreen, such that the user can enter the user-defined target pressures by touching the screen. The user interface may further comprise a software, an application or any other suitable form, such that many functions can be integrated into one user interface. The functions may comprise at least: inflating/deflating each of the air-inflatable tire without a specific user-defined target pressure, inflating/deflating each of the air-inflatable up to a specific user-defined target pressure, selecting road conditions, selecting weather conditions, entering vehicle's load, entering manufacturer's recommended tire pressure, displaying alarms for abnormal tire pressures, displaying warning messages for abnormal tire pressures, displaying current measured air pressure of each of the tire cavities, displaying an image of a vehicle connected to one or more pressure adjusting devices with corresponding numbers, pairing with each of the one or more pressure adjusting devices, and/or entering username and password.

The signals received by the remote device from the pressure adjusting device can be measured air pressure in each of the tire cavity and related tire cavity location/number, alarm information if any of the measured air pressure in the tire cavity is abnormal, and/or any other related information. The signals from each of the pressure adjusting devices can be transmitted to the remote device wirelessly, via such as for example Wi-Fi, Bluetooth, preferably, Wi-Fi. Each of the pressure adjusting devices may have a unique IP address, such that each of the pressure adjusting device is specified and differentiated by the remote device. Therefore, the control of the one or more pressure adjusting devices can be centralized in the remote device. The remote device may be initialized by entering the manufacturer's recommended tire pressure. Other information relating to the tire, such as brand, model, age, or any other tire information can be required by the remote device.

The remote device may further comprise a signal generator configured to generate one or more control signals comprising the user-defined target pressure. The remote device may utilize artificial intelligence, machine-learning as disclosed in the present disclosure. The user may select the road condition, weather condition, vehicle's load, and/or any other function provided by the remote device. The Al comprised by the signal generator may renew the user-defined target pressure by considering all the entered information in addition to a status of each of the tires. The renewed user-defined target pressure can be a part of the one or more control signals.

The remote device may further comprise a transmitting unit configured to transmit the one or more control signals to the communication interface. Preferably, the transmitting unit comprised by the remote device is configured to transmit the one or more control signals wirelessly to the communication interface, via such as for example Bluetooth, BLE, Wi-Fi, preferably via Wi-Fi. Preferably, the transmitting unit is configured to transmit the one or more control signals to the communication interface of each of the one or more pressure adjusting devices, such that each of the one or more pressure adjusting devices can be individually controlled or instructed by the remote device. Additionally, the one or more pressure adjusting devices can be controlled or instructed simultaneously, such as for example being instructed to inflate or deflate the corresponding air-inflatable tire without a specific user-defined target pressure, or more specifically by pressing/touching the "inflate/inflation/increasing pressure/pressure up/any other equivalent expression" button or the "deflate/deflation/decreasing pressure/reducing pressure/pressure down/any other equivalent expression" button. Additionally, the transmitting unit of the remote device may transmit signals to a central server. Preferably, the transmitting unit of the remote device may transmit signals to a cellular tower and the signals are subsequently transmitted to the central server via a wide area network. The signals transmitted to the central server can be system logs received from the pressure adjusting device, monitoring instructions for the central server to monitor over each of the one or more pressure adjusting devices, and/or any other possible communication signals with the central server. Alternatively, the remove device comprises a transceiver adapted to transmit and receive signals from each of the one or more pressure adjusting devices and/or the central server.

According to some embodiments, a pressure adjusting system for adjusting air pressure in air-inflatable tires of a vehicle, each air-inflatable tire defining a tire cavity when being mounted on a wheel of the vehicle can be provided.

According to some embodiments, the pressure adjusting system may comprise:
- at least one of the pressure adjusting device; and
- the remote device;
and wherein the transmitting unit of the remote device can be further configured to transmit the one or more control signals to each respective communication interface of the at least one pressure adjusting devices.

Each respective communication interface of the at least one pressure adjusting device can be paired to the remote device via such as for example Bluetooth, BLE, Wi-Fi, or respective IP addresses. Therefore, the at least one of the pressure adjusting devices and the remote device interact or interdepend on each other, thereby forming a unified whole. The pressure adjusting system may comprise one of the pressure adjusting device and the remote device, meaning that the remote device may transmit the one or more signals to only one of the pressure adjusting device. This can happen in certain situations, such as for example single tires with leakage. By pairing the remote device to a single pressure adjusting device, the energy consumption of the pressure adjusting system can be effectively reduced. Alternatively, the pressure adjusting device may comprise more than one of the pressure adjusting devices. This can happen in normal situations, such as for example inflating/deflating more than one of the air-inflatable tires when experiencing changing conditions.

As disclosed in the present disclosure, the transmitting unit of the remote device is configured to transmit the one or more control signals to each respective communication interface of the at least one pressure adjusting device, such than each of the at least one pressure adjusting device can individually communicate with the remote device.

### Brief Description of the Drawings

Some example embodiments will now be described with reference to the accompanying drawings.
Fig. 1 is a schematic view illustrating application of an example embodiment of a pressure adjusting device according to the present disclosure.
Fig. 2 illustrates schematically a top view of a first variant of an inside of a housing of the pressure adjusting device with a top cover removed according to the present disclosure.
Fig. 3 illustrates schematically a top view of a second variant of the inside of the housing of the pressure adjusting device with the top cover removed according to the present disclosure.
Fig. 4 illustrates schematically a top view of a third variant of the inside of the housing of the pressure adjusting device with the top cover removed according to the present disclosure.
Fig. 5A is a schematic perspective view illustrating a second example embodiment of the pressure adjusting device according to the present disclosure.
Fig. 5B is a schematic side view of the second example embodiment of the pressure adjusting device with a cross-section A-A' according to the present disclosure.
Fig. 6 is a schematic top side view of the second example embodiment of the pressure adjusting device with the cross-section A-A' according to the present disclosure.
Fig. 7 is a schematic bottom side view of the second example embodiment of the pressure adjusting device with the cross-section A-A' according to the present disclosure.
Fig. 8 illustrates schematically a top view of a fourth variant of the inside of the housing of the pressure adjusting device with the top cover removed according to the present disclosure.
Fig. 9 illustrates schematically a perspective view of an example embodiment of fixation means according to the present disclosure.
Fig. 10 illustrates schematically a top view of a vehicle with four pressure adjusting devices being mounted to four wheels of a vehicle, respectively, and a first example of a remote device according to the present disclosure.
Fig. 11 illustrates schematically a top view of a vehicle with four pressure adjusting devices being mounted to four wheels of a vehicle, respectively, and a second example of the remote device according to the present disclosure.
Fig. 12 illustrates schematically a tire pressure and condition screen view of the second example of the remote device according to the present disclosure.

In different figures, identical reference/signs refer to the same or a similar feature.

### Detailed Description of Embodiment(s)

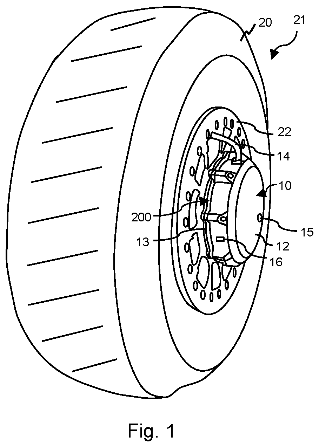

Fig. 1 is a schematic view illustrating the application of an example embodiment of a pressure adjusting device 10 according to the present disclosure.

Fig. 1 illustrates a perspective view of the pressure adjusting device 10 for adjusting air pressure in an air-inflatable tire 20 and the pressure adjusting device 10 is mounted on a wheel of a vehicle 21. It is understandable that the pressure adjusting device 10 can have a varied shape, dimension, and/or material compared to the example embodiment of the pressure adjusting device 10 being depicted in Fig. 1. The pressure adjusting device 10 comprises a housing 12 adapted to host a plurality of components and the housing 12 is further adapted to be coupled to a hub of the wheel 22. The housing 12 is adapted to host a sealing element 200, which is adapted to seal the housing 12, thereby defining an internal cavity in the housing 12, wherein the internal cavity encloses air under an internal pressure. As illustrated in Fig. 1, the sealing element 200 can be a rubber ring being disposed of along the circumference of the housing 12. Therefore, the housing 12 is waterproof, watertight, dustproof, and dust-tight. The pressure adjusting device 10 and the tire cavity of the air-inflatable tire 20 is connected through a stainless braided hose line 14. On one end, the stainless braided hose line 14 is fluidically connected to the pressure adjusting device 10. On the other end, the stainless braided hose line 14 is fixed to an original stem valve of the air-inflatable tire 20. It is understandable that the stainless braided hose line 14 can be any other suitable air tube adapted to fluidically connect the pressure adjusting device 10 and the tire cavity of the air-inflatable tire 20. It is also understandable that the stainless braided hose line 14 can have varied length, diameter, and/or material compared to the example embodiment as illustrated in Fig. 1. The housing further comprises an on/off button 15 adapted to manually turn on/turn off the pressure adjusting device 10. The housing further comprises a USB charging port 16. The USB charging port is covered by a waterproof, watertight, dustproof, and dust-tight cover. It is understandable that the USB charging port can be a USB-C charging port or any other compatible charging port. The USB charging port can comprise more than one changing ports . And it is understandable that the USB charging port cover can be waterproof, watertight, dustproof, and/or dust-tight. It is understandable that the USB charging port and/or the one/off button can be positioned at different locations as illustrated in Fig. 1. The USB charging port and the one/off button can be integrated into a single port.

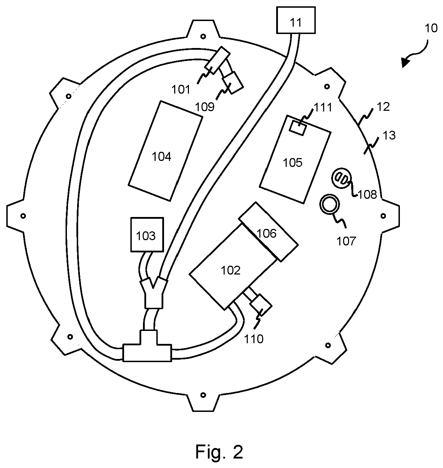

Fig. 2 illustrates schematically a top view of a first variant of an inside of a housing 12 of the pressure adjusting device 10 with a top cover removed according to the present disclosure. Components having identical reference numbers than on Fig. 1 fulfil the same function.

The pressure adjusting device 10 comprises a housing 12 adapted to host a plurality of components, wherein the plurality of components comprises:
- a valve 101 coupled to the tire cavity 11;
- a pump 102 coupled to the tire cavity 11;
- a pressure sensor 103 configured to sense a measured air pressure in the tire cavity 11;
- a battery 104 adapted to power the pressure adjusting device 10; and
- a controller 105 configured to instruct the pump 102 to pump air into the tire cavity 11, thereby inflating the air-inflatable tire 20; and further configured to instruct the valve 101 to allow air to flow out of the tire cavity 11 into the internal cavity, thereby deflating the air-inflatable tire 20.

In one example embodiment, the valve 101 is an electromagnetic valve, which is a two-way normally closed pneumatic aluminum electric solenoid air valve. The valve 101 is powered by 12V direct current, DC power source. The pump 102 is a 12V motor with a piston compressor. The battery is a 12V battery pack with 3S2P configuration with a battery management system, BMS. The 12V battery pack comprises six battery cells. Three cells are connected in series, 3S to increase the voltage, and two sets of these series-connected cells are connected in parallel, 2P to double the capacity. The controller 105 is a compact Wi-Fi development board with a model ESP32-S2 Pico. The controller 105 controls the pressure adjusting device 10, making decisions based on the pressure sensor 103 readings and activating a four-channel 12V mechanical relay. The relay controls the valve 101 and the pump 102 by switching them on or off by following instructions from the controller 105. The plurality of components hosted by the housing 12 and their corresponding air tube connections are illustrated in Fig. 2. As illustrated in Fig. 2, when deflating the air-inflatable tire 20, the valve 101 is instructed to allow air to flow out of the tire cavity 11 into the internal cavity. An exhaust tube of the valve 101 is further connected to a silencer 109. The silencer 109 is made of a porous metal housing, which is sintered bronze. The silencer 109 is introduced to effectively reduce the sound level when compressed air escapes into the atmosphere. It is understandable that the silencer 109 is a supplement for the pressure adjusting device, which is not necessary for the proper operation of the pressure adjusting device. The silencer 109 may be replaced by an air filter. An input tube of the pump 102 is further connected to a filter 110. The filter 110 filters dust and water out of input air of the pump 102. Additionally, the filter 110 can filter moisture up to a certain level out of the input air of the pump 102. It is understandable that the plurality of components hosted by the housing 12 as illustrated in Fig. 2 can have varied model, varied input voltage, varied output voltage, varied air tube connection, added/removed filter/silencer, and/or air flow path, as long as the disclosed functions of the pressure adjusting device 10 are fulfilled.

As illustrated in Fig. 2, the housing 12 further hosts a failure prevention system comprising:
- one heat sinks 106 being in contact with the pump 102; wherein the heat sink 106 is adapted to dissipate heat from the housing 12; and
- a pressure regulating setup comprising:
   ∘ a pair of holes, both extending through a thickness of a wall of the housing 13, thereby coupling the internal cavity to ambient air;
   ∘ a first unidirectional pressure regulating valve 107 coupled to one of the holes and adapted to allow air to enter, from the corresponding hole, the internal cavity when triggered by the internal pressure; and
   ∘ a second unidirectional pressure regulating valve 108 coupled to the other hole and adapted to allow air to exit, from the corresponding other hole, the internal cavity when triggered by the internal pressure;

The heat sink comprises a thermally conductive material, which for example comprises an aluminum alloy. It is understandable that the heat sink can comprise any other thermally conductive material, such as for example aluminum, copper, brass, or copper alloy. The first unidirectional pressure regulating valve 107 and the second unidirectional pressure regulating valve 108 are two check valves, while having two opposite air flow directions.

A center of mass of the plurality of components in the housing 12 is positioned at a geometrical center of the housing 12, thereby allowing inflation or deflation of the air-inflatable tire 20 while the vehicle 21 is static and while the vehicle 21 is moving. The arrangement of the plurality of components in the housing 12 is compact. The center of gravity of the plurality of components lies on the axis of rotation of the wheel of a vehicle 21 and in particular within the central recess of the vehicle wheel rim, as illustrated in Fig. 1.

As illustrated in Fig. 2, the housing 12 is further adapted to host a communication interface 111 configured to receive one or more control signals for the controller 105, thereby allowing remote control of the pressure adjusting device 10. As depicted in Fig. 1 and Fig. 2, the pressure adjusting device 10 is coupled to the tire cavity 11 of one of the wheels of the vehicle 21, such that the measured air pressure in the tire cavity 11 of the corresponding air-inflatable tire 20 can be remotely controlled through the communication interface 111.

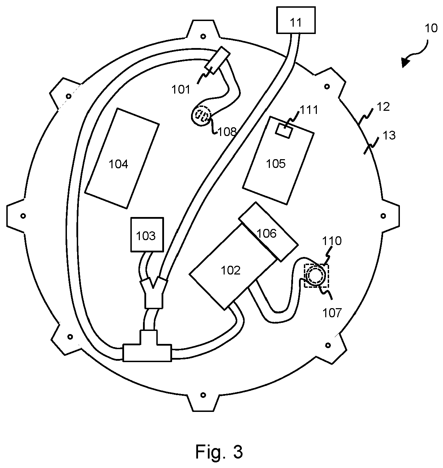

Fig. 3 illustrates schematically a top view of a second variant of the inside of the housing 12 of the pressure adjusting device 10 with the top cover removed according to the present disclosure. Components having identical reference numbers than on Fig. 1 or Fig. 2 fulfil the same function.

As illustrated in Fig. 3, the input tube of the pump 102 is firstly connected to the first unidirectional pressure regulating valve 107 and then connected to a filter 110. The first unidirectional pressure regulating valve 107 is coupled to one of the holes extending through a thickness of the wall of the housing 13, thereby coupling the input tube of the pump 102 to ambient air. The first unidirectional pressure regulating valve 107 is adapted to allow air to enter, from the corresponding hole, the internal cavity when triggered by the internal pressure. Therefore, the ambient air first passes the filter 110, then through the first unidirectional pressure regulating valve 107, and finally reaches the inlet of the pump 102. The filter 110 can be positioned outside the space enclosed by the housing 12 while being secured to the respective hole on the housing 12. Fig. 3 illustrates a front side of the wall of the housing 13. The filter can be positioned at a back side of the wall of the housing 13, being opposite to the front side of the wall of the housing 13 as illustrated in Fig. 3. The filter can be secured to the back side of the wall of the housing 13, be aligned with the corresponding hole and be fluidically connected to the first unidirectional pressure regulating valve 107. There is no air leakage, water leakage and dust ingress between the filter 110 and the wall of the housing 13.

As illustrated in Fig. 3, the exhaust tube of the valve 101 is connected to the second unidirectional pressure regulating valve 108. Alternatively, the exhaust tube of the valve 101 can be firstly connected to the second unidirectional pressure regulating valve 108, then connected to a filter 110, and finally fluidically connected with the ambient air. The filter 110 can effectively prevent the water, the dust, and even the moisture from entering the housing 12 of the pressure adjusting device 10, thereby further protecting the electronic components being located inside the housing 12. The second unidirectional pressure regulating valve 108 is coupled to the other hole extending through a thickness of the wall of the housing 13, thereby coupling the exhaust tube of the valve 101 to ambient air. The second unidirectional pressure regulating valve 108 is adapted to allow air to exit, from the corresponding other hole, the internal cavity when triggered by the internal pressure.

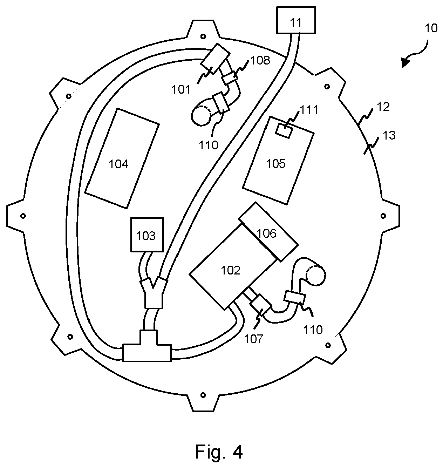

Fig. 4 illustrates schematically a top view of a third variant of the inside of the housing 12 of the pressure adjusting device 10 with the top cover removed according to the present disclosure. Components having identical reference numbers than on Fig. 1 or Fig. 2 or Fig. 3 fulfil the same function.

As illustrated in Fig. 4, the input tube of the pump 102 is firstly connected to the first unidirectional pressure regulating valve 107, secondly connected to a filter 110, and then directly coupled to one of the holes extending through a thickness of the wall of the housing 13, thereby coupling the input tube of the pump 102 to ambient air. Therefore, input air entering the housing 12 from the ambient air firstly passes through the filter 110, then passes through the first unidirectional pressure regulating valve 107, and then reaches the input of the pump 102. The first unidirectional pressure regulating valve 107 is adapted to allow air to enter, from the corresponding hole, the internal cavity when triggered by the internal pressure.

As illustrated in Fig. 4, the exhaust tube of the valve 101 is firstly connected to the second unidirectional pressure regulating valve 108 and then connected to a filter 110. The second unidirectional pressure regulating valve 108 is coupled to the other hole extending through a thickness of the wall of the housing 13, thereby coupling the exhaust tube of the valve 101 to ambient air. Therefore, exhaust air from the valve 101 first passes through the second unidirectional pressure regulating valve 108, then passes through the filter 110, and then exits the housing 12. The second unidirectional pressure regulating valve 108 is adapted to allow air to exit, from the corresponding other hole, the internal cavity when triggered by the internal pressure.

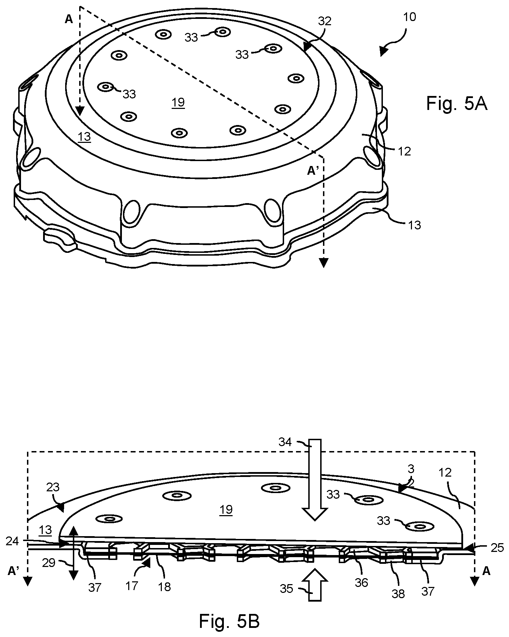

Fig. 5A is a schematic perspective view illustrating a second example embodiment of the pressure adjusting device 10 according to the present disclosure. Fig. 5B is a schematic side view of the second example embodiment of the pressure adjusting device 10 with a cross-section A-A' according to the present disclosure. Components having identical reference numbers than on Fig. 1 or Fig. 2 or Fig. 3 or Fig. 4 fulfil the same function.

As illustrated in Fig. 5A, the housing 12 further comprises a separate cover plate 19. The separate cover plate 19 is coupled to the housing 12 to cover the first hole 17 via ten screws 33. It is understandable that the separate cover plate 19 may be coupled to the housing 12 to cover the first hole 17 via different amount of screws 33 from the example in Fig. 5A. For simplicity, only some of the ten screws 33 are labeled with the reference signs. In a mounted state of the separate cover plate 19, the separate cover plate 19 is spaced apart from an outer surface 23 of the housing 12, as indicated by the arrow 29, to form an air passage which preferentially goes all around the separate cover plate 19. On Fig. 5A, the separate cover plate 19 is spaced apart from an outer surface 23 of the housing 12, as indicated by the arrow 29, to form ten air passages 24, 25 between the separate cover plate 19 and the barrier 18. It is understandable that under the selected view, only two of the ten air passages 24, 25 can be illustrated. In the second embodiment of the pressure adjusting device 10, an air passage is formed between each pair of adjacent screws 33. As shown in Fig. 5A and Fig. 5B, this arrangement creates a total of ten air passages. Each of the ten air passages 24, 25 is configured to allow ambient air to enter or exit the internal cavity through the barrier 18, when triggered by the internal pressure in the internal cavity. The respective arrow signs of the air passages 24, 25 indicate a corresponding direction of ambient air entering the internal cavity through the gap between the separate cover plate 19 and the outer surface of the housing 23, i.e. inlets/entrances/any equivalent expression, to reach the barrier 18, when trigged by the internal pressure in the internal cavity. Moreover, the ten air passages 24, 25 between the separate cover plate 19 and the barrier 18 are distributed along a perimeter of the separate cover plate 32. Furthermore, the ten air passages 24, 25 between the separate cover plate 19 and the barrier 18 are in fluid communication with each other. Preferably, the barrier 18 comprises a plurality of pores extending through a thickness of the barrier 18. Preferably, the barrier 18 comprises one or more polymer-based materials. Preferably, the barrier 18 comprises a gas-permeable, vapor-permeable, and waterproof membrane.

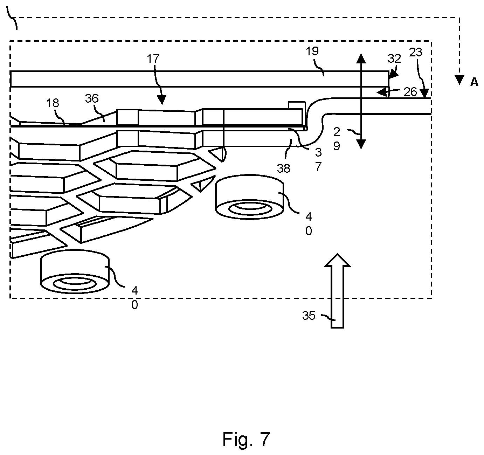

More specifically, the barrier 18 is secured to the first hole 17 of the housing through a clamp grid plate 36, a gasket ring 37, and a rigid mesh 38. The barrier 18 can be ePTFE membrane. Additionally or optionally, the rigid mesh 38 can be an extension from a wall of the housing 13 as illustrated in Fig. 5B and Fig.7, or a separate piece from the wall of the housing 13, e.g. a separate steel mesh. Additionally or optionally, the gasket ring 37 can comprise silicone.

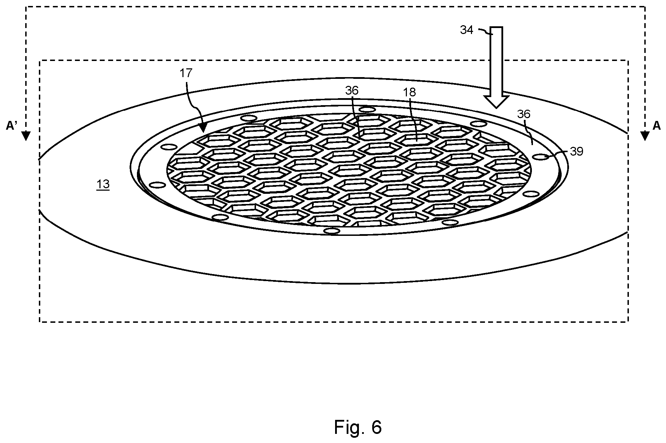

Fig. 6 is a schematic top side view of the second example embodiment of the pressure adjusting device 10 with the cross-section A-A' according to the present disclosure. Components having identical reference numbers than on Fig. 1 or Fig. 2 or Fig. 3 or Fig. 4 or Fig. 5A or Fig. 5B fulfil the same function.

Fig. 6 illustrates additional details of the clamp grid plate 36 as viewed in the direction of arrow 34. For clarity of the internal components, the separate cover plate 19 has been removed to present the clamp grid plate 36. As illustrated in Fig. 6, the clamp grid plate 36 is positioned within the first hole 17. The clamp grid plate 36 further includes ten drilled holes 39 that allow the ten screws 33 to pass through the barrier 18, thereby securing the barrier 18 to the housing 12. As illustrated in Fig. 6, the clamp grid plate 36 can have a honeycomb hollow pattern, which increases its mechanical strength while reducing material usage when making the clamp grid plate 36 and providing openings for air exchange between the internal cavity and the ambient environment.

Fig. 7 is a schematic bottom side view of the second example embodiment of the pressure adjusting device 10 with the cross-section A-A' according to the present disclosure. Components having identical reference numbers than on Fig. 1 or Fig. 2 or Fig. 3 or Fig. 4 or Fig. 5A or Fig. 5B or Fig. 6 fulfil the same function.

Fig. 7 illustrates additional details of the rigid mesh 38 as viewed in the direction of arrow 35. As illustrated in Fig. 7, in a mounted state of the separate cover plate 19, the separate cover plate 19 is spaced apart from an outer surface 23 of the housing 12, the spacing is further demonstrated with arrow 29, to form an air passage which preferentially goes all around the separate cover plate 19. On Fig. 7, the separate cover plate 19 is spaced apart from an outer surface 23 of the housing 12, as indicated by the arrow 29, to form at least one air passage 26 between the separate cover plate 19 and the barrier 18. The at least one air passage 26 is configured to allow ambient air to enter or exit the internal cavity through the barrier 18, when triggered by the internal pressure in the internal cavity. Moreover, the air passage 26 between the separate cover plate 19 and the barrier 18 is distributed along the perimeter of the separate cover plate 32. As illustrated in Fig. 7, the barrier 18 is secured to the first hole 17 of the housing through a clamp grid plate 36, a gasket ring 37, and a rigid mesh 38. Two of the ten nuts 40 used to fasten the ten screws 33 are shown. As illustrated in Fig. 7, the rigid mesh 38 can have a honeycomb hollow pattern, which increases its mechanical strength while reducing material usage when making the rigid mesh 38 and providing openings for air exchange between the internal cavity and the ambient environment. Preferably, the honeycomb hollow pattern of the rigid mesh 38 is aligned with that of the clamp grid plate 36 so that unobstructed air passages are formed between the clamp grid plate 36 and the rigid mesh 38, with the barrier 18 positioned between them as the only intended restriction.

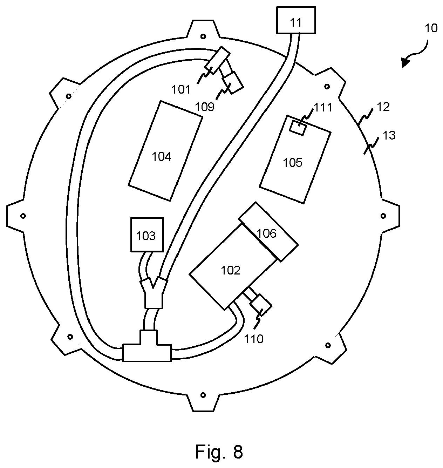

Fig. 8 illustrates schematically a top view of a fourth variant of the inside of the housing of the pressure adjusting device with the top cover removed according to the present disclosure. Components having identical reference numbers than on Fig. 1 or Fig. 2 or Fig. 3 or Fig. 4 or Fig. 5A or Fig. 5B or Fig. 6 or Fig. 7 fulfil the same function.

Compared to the first variant and the second variant of the inside of the housing of the pressure adjusting device as illustrated in Fig. 2, Fig. 3 and Fig. 4, Fig. 8 presents a fourth variant without the pair of holes, i.e. the second hole and the third hole extending through a thickness of a wall of the housing 13. In this variant, the alternative pressure regulating setup comprising the barrier 18 is implemented in the housing to equalize the internal pressure in the internal cavity in respect to the ambient pressure.

It is understandable that the first variant and the second variant and the variant illustrated in Fig. 2, Fig. 3 and Fig. 4 can each be combined with the alternative pressure regulating setup comprising the barrier 18, which is implemented in the housing 12 to equalize the internal pressure in the internal cavity in respect to the ambient pressure. In these variations, both types of pressure regulating setups, namely the two unidirectional pressure regulating valves 107, 108 and the barrier 18, together with their essential components as disclosed in this disclosure, coexist in the pressure adjusting device 10.

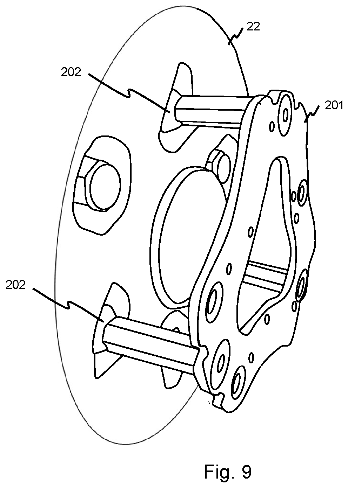

Fig. 9 illustrates schematically a perspective view of an example embodiment of fixation means 201 according to the present disclosure. Components having identical reference numbers than on Fig. 1 or Fig. 2 or Fig. 3 or Fig. 4 or Fig. 5A or Fig. 5B or Fig. 6 or Fig. 7 or Fig. 8 fulfil the same function.

As illustrated in Fig. 1 and Fig. 9, the pressure adjusting device 10 further comprises fixation means 201 coupled to the housing 12. The fixation means 201 are adapted to couple the housing 12 to the hub of the wheel 22. The fixation means 201 are substantially contiguous with a hubcap of the wheel 21, and are fastened to the wheel 21, via a set of lugnuts 202. The housing 12 is further fastened to the fixation means 201. Therefore, the pressure adjusting device 10 is coupled to the vehicle by way of a set of fasteners, being arranged to mate with an existing bolt pattern and a wheel hub of the vehicle. It is understandable that the fixation means 201 may have varied dimension, shape, material, connection means to the hub of the wheel 22, connection means to a wheel of a vehicle 21, connection means to the housing 12, distance to the hub of the wheel 22, distance to a wheel of a vehicle 21, and/or fastening means from the example embodiment as illustrated in Fig. 9. The pressure adjusting device 10 is functional while the vehicle is static and while the vehicle is moving.

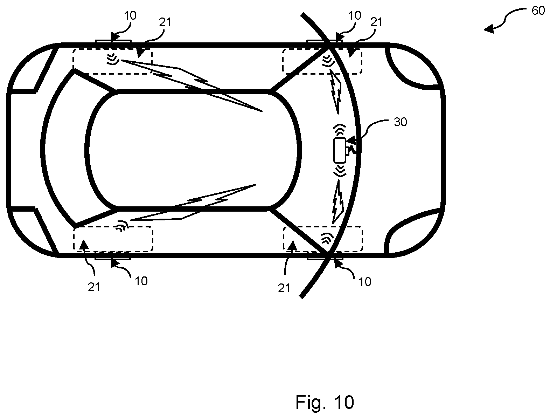

Fig. 10 illustrates schematically a top view of a vehicle with four pressure adjusting devices 10 being mounted to four wheels of a vehicle 21, respectively, and a first example of a remote device 30 according to the present disclosure. Components having identical reference numbers than on Fig. 1 or Fig. 2 or Fig. 3 or Fig. 4 or Fig. 5A or Fig. 5B or Fig. 6 or Fig. 7 or Fig. 8 or Fig. 9 fulfil the same function.

As illustrated in Fig. 10, a pressure adjusting device 10 is mounted to the hub 22 of each of the four wheels of a vehicle 21, being illustrated with dashed lines. As illustrated in Fig. 10, a remote device 30 for communicating with each of the four pressure adjusting devices 10 is positioned inside the vehicle and in front of the vehicle. It is understandable that the remote device 30 can be a remote control with buttons, with a power source being independent from a power source of the vehicle, preferably with a digital screen. It is also understandable that the remote device 30 can be a smartphone, a tablet, a digital device similar to smartphone, a digital device similar to tablet. The remote device 30 can have a touchscreen. The remote device 30 comprises a user interface configured to receive the user-defined target pressure for the tire cavity 11. The user-defined target pressure can be entered to the remote device 30 by pressing buttons or touching the touchscreen. The remote device 30 further generates one or more control signals comprising the user-defined target pressure and then transmits the one or more control signals to the communication interface 111 to the respective pressure adjusting device 10 mounted to each of the four wheels of the vehicle 21. The remote device 30 and the pressure adjusting device 10 are comprised by a pressure adjusting system 40 for adjusting air pressure in air-inflatable tires of a vehicle 20. The remote device 30 wirelessly communicates with each of the pressure adjusting devices 10. It is understandable that it can be that only one or only two or only three pressure adjusting device(s) is/are mounted to a respective wheel of a vehicle 21.

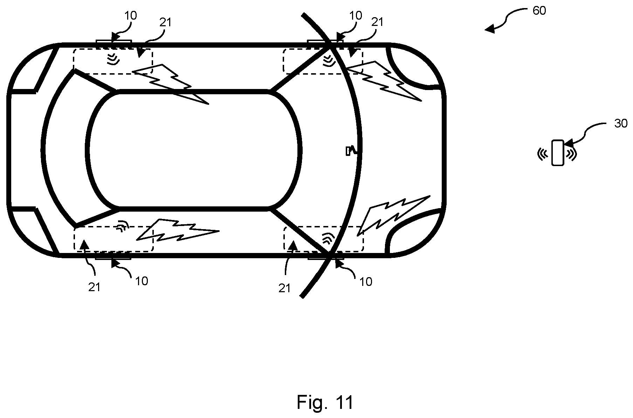

Fig. 11 illustrates schematically a top view of a vehicle with four pressure adjusting devices 10 being mounted to four wheels of a vehicle 21, respectively, and a second example of a remote device 30 according to the present disclosure. Components having identical reference numbers than on Fig. 1 or Fig. 2 or Fig. 3 or Fig. 4 or Fig. 5A or Fig. 5B or Fig. 6 or Fig. 7 or Fig. 8 or Fig. 9 or Fig. 10 fulfil the same function.

As illustrated in Fig. 11, the remote device 30 can be utilized outside the vehicle, even from a certain distance from the vehicle. The remote device 30 wirelessly communicates with each of the pressure adjusting devices 10.

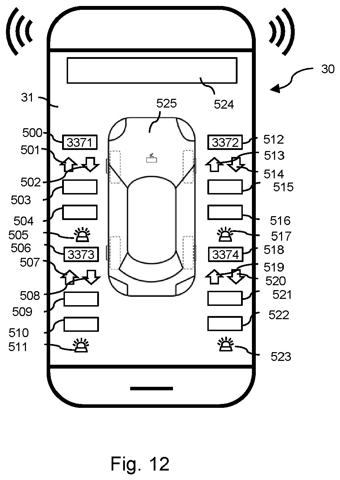

Fig. 12 illustrates schematically a tire pressure and condition screen view of the second example of the remote device 30 according to the present disclosure. Components having identical reference numbers than on Fig. 1 or Fig. 2 or Fig. 3 or Fig. 4 or Fig. 5A or Fig. 5B or Fig. 6 or Fig. 7 or Fig. 8 or Fig. 9 or Fig. 10 or Fig. 11 fulfil the same function.

As illustrated in Fig. 12, the second example of the remote device 30 has a touchscreen. It is understandable that the remote device 30 can be a smartphone with a touchscreen. The pressure adjusting device 10 can be controlled by a compatible application that is installed in the smartphone. The compatible application can be available on app stores such as the Apple app store and Android Google Play store. The application can also be downloaded and installed into the vehicle's operating system, which can have a screen or touchscreen. The tire pressure and condition screen view have a masthead display zone 524, where the info of the user, such as for example username and/or password can be entered to log in an operating system of the remote device 30. An image of the vehicle 525 is displayed with the respective four tire positions. The remote device 30 can be activated when at least one pressure adjusting device 10 is mounted to a wheel of the vehicle 21. It is understandable that the remote device 30 can be activated when the pressure adjusting device 10 is not mounted to a wheel of the vehicle 21, such as for example when inflating or deflating one or more spare air-inflatable tires 20 of a vehicle. Each of the mounted pressure adjusting device has a unique number as depicted in zones 500, 506, 512 and 518. The tire pressure of each of the coupled air-inflatable tires of the vehicle 20 can be individually monitored and adjusted. The pressure sensor 103 of each of the pressure adjusting device 10 transmits the measured air pressure in the tire cavity 11 information to the remote device 30 via the respective communication means 111. The real-time measured air pressures in the tire cavity 11 are displayed in zones 503, 509, 515, and 521. User-defined target pressures for the tire cavity 11 can be entered by the user in zones 504, 510, 516, and 522. Each of the air-inflatable tires can also be inflated or deflated without a specific user-defined target pressure by pressing once the increasing pressure button 501, 507, 513, and 519 or by pressing once the decreasing pressure button 502, 508, 514, and 520. The buttons 501, 507, 513, 519, 502, 508, 514, and 520 can be deactivated by a second pressing. By default, the measured air pressures in the tire cavity 11 are maintained if the user does not give any further instruction and keep the remote device 30 turning on. In one example embodiment, after the pressure adjusting device 10 is manually turned on by pressing the on/off button 15 being located at the exterior side of the housing 12, as illustrated in Fig. 1, the pressure adjusting device 10 keeps on while keeping the minimal energy consumption. Via the remote device 30, the user can switch each of the pressure adjusting devices 10 to a standby mode by pressing, such as for example long pressing the corresponding pressure adjusting device 10 once or twice as displayed in the image of the vehicle 525. When the measured air pressure in any of the tire cavity 11 is abnormal, such as for example due to a punctured tire, the corresponding warning indicator 505, 511, 517, and 523 will be on. The corresponding warning indicator 505, 511, 517, and 523 will be off when the measured air pressure in any of the tire cavity 11 returns to normal by inflating or deflating the corresponding tire cavity 11. It is understandable that the present disclosure illustrates an example embodiment of the remote device 30. The remote device 30 may have varied user interfaces being different from the example embodiment as illustrated in Fig. 12. The remote device 30 can have a login screen view of the remote device 30. Additionally, the remote device 30 can have a pairing screen view adapted to pair each of the at least one pressure adjusting device 10 with the remote device 30. It is understandable that the remote device 30 can have an additional screen view adapted to choose a specific road condition, such as for example gravel, sand, paved road or any other possible road condition, to choose a specific weather condition, such as for example snow, rain, wind or any other possible weather condition. The operation system of the remote device 30 can utilize artificial intelligence, Al, machine-learning to calculate optimized tire pressure under certain conditions by considering the information of the vehicle upon the user's request.

The user-defined target pressure can be more than or equal to 3 psi from the measured air pressure in the tire cavity. In addition, the controller 105 adjusts the measured air pressure in the tire cavity 11 to the user-defined target pressure with a resolution equal to or finer than 3 psi.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A pressure adjusting device (10) for adjusting air pressure in an air-inflatable tire (20) defining a tire cavity (11) when being mounted on a wheel of a vehicle (21); wherein the pressure adjusting device (10) comprises:
- a plurality of components; and
- a housing (12) adapted to host the plurality of components, wherein the plurality of components comprises:
∘ a valve (101) coupled to the tire cavity (11);
∘ a pump (102) coupled to the tire cavity (11);
∘ a pressure sensor (103) configured to sense a measured air pressure in the tire cavity (11);
∘ a battery (104) adapted to power the pressure adjusting device (10);
∘ a sealing element (200) adapted to seal the housing (12), thereby defining an internal cavity in the housing (12), wherein the internal cavity encloses air under an internal pressure;
∘ a controller (105) configured to instruct the pump (102) to pump air into the tire cavity (11), thereby inflating the air-inflatable tire (20); and further configured to instruct the valve (101) to allow air to flow out of the tire cavity (11) into the internal cavity, thereby deflating the air-inflatable tire (20); and
∘ a failure prevention system comprising:
▪ one or more heat sinks (106) being in contact with one or more of the following: the valve (101), the pump (102), the pressure sensor (103), the battery (104), the controller (105); wherein each heat sink (106) is adapted to dissipate heat from the housing (12); and
▪ a pressure regulating setup comprising:
• a first hole (17) extending through a thickness of a wall of the housing (13), thereby coupling the internal cavity to ambient air; and a barrier (18) secured to the housing (12) over the hole (17); wherein the barrier (18) is at least partially air-permeable and adapted to equalize the internal pressure in respect to ambient pressure; and/or
• a second hole and a third hole, both extending through a thickness of a wall of the housing (13), thereby coupling the internal cavity to ambient air; a first unidirectional pressure regulating valve (107) coupled to the second hole and adapted to allow air to enter, from the second hole, the internal cavity when triggered by the internal pressure; and a second unidirectional pressure regulating valve (108) coupled to the third hole and adapted to allow air to exit, from the third hole, the internal cavity when triggered by the internal pressure;
and wherein the housing (12) is further adapted to be coupled to a hub of the wheel (22).

2. The pressure adjusting device (10) according to any of the preceding claims, wherein the first unidirectional pressure regulating valve (107) and the second unidirectional pressure regulating valve (108) are self-actuated and are adapted to limit the internal pressure within a preset internal pressure range; and wherein atmospheric pressure is comprised within the preset internal pressure range.

3. The pressure adjusting device (10) according to any of the preceding claims, wherein the first unidirectional pressure regulating valve (107) is adapted to bring the internal pressure above a first internal pressure threshold by allowing air to enter the internal cavity via the second hole; and wherein the second unidirectional pressure regulating valve (108) is adapted to bring the internal pressure below a second internal pressure threshold by allowing air to exit the internal cavity via the third hole.

4. The pressure adjusting device (10) according to any of the preceding claims, wherein the first unidirectional pressure regulating valve (107) and the second unidirectional pressure regulating valve (108) are two check valves; and wherein the two check valves have two opposite air flow directions.

5. The pressure adjusting device (10) according to claim 1, wherein the housing (12) further comprises a separate cover plate (19); and wherein the separate cover plate (19) is adapted to be coupled to the housing (12) to cover the first hole (17); and wherein, in a mounted state of the separate cover plate (19), the separate cover plate (19) is spaced apart from an outer surface (23) of the housing (12) to form at least one air passage (24, 25, 26) between the separate cover plate (19) and the barrier (18); and wherein the at least one air passage (24, 25, 26) is configured to allow ambient air to enter or exit the internal cavity through the barrier (18), when triggered by the internal pressure in the internal cavity.

6. The pressure adjusting device (10) according to claim 5, wherein the separate cover plate (19) is spaced apart from an outer surface of the housing (23) to form more than one air passages (24, 25, 26) between the separate cover plate (19) and the barrier (18).

7. The pressure adjusting device (10) according to claim 6, wherein the more than one air passages (24, 25, 26) between the separate cover plate (19) and the barrier (18) are distributed along a perimeter of the separate cover plate (32).

8. The pressure adjusting device (10) according to claims 6 or 7, wherein the more than one air passages (24, 25, 26) between the separate cover plate (19) and the barrier (18) are in fluid communication with each other.

9. The pressure adjusting device (10) according to any one of the preceding claims, wherein a center of mass of the plurality of components in the housing (12) is positioned at a geometrical center of the housing (12), thereby allowing inflation or deflation of the air-inflatable tire (20) while the vehicle (21) is static and while the vehicle (21) is driving.

10. The pressure adjusting device (10) according to any of the preceding claims, wherein the housing (12) is further adapted to host a communication interface (111) configured to receive one or more control signals for the controller (105), thereby allowing remote control of the pressure adjusting device (10); and wherein the pressure adjusting device (10) is coupled to the tire cavity (11) of one of the wheels of the vehicle (21), such that the measured air pressure in the tire cavity (11) of the corresponding air-inflatable tire (20) can be remotely controlled through the communication interface (111).

11. The pressure adjusting device (10) according to claim 10, wherein the control signals comprise a user-defined target pressure for the tire cavity (11); and wherein the controller (105) is further configured to instruct the pump (102) to pump air into the tire cavity (11) until the pressure sensor (103) senses the measured air pressure in the tire cavity (11) corresponds to the user-defined target pressure; and wherein the controller (105) is further configured to instruct the valve (101) to allow air to flow out of the tire cavity (11) until the pressure sensor (103) senses the measure air pressure in the tire cavity (11) corresponds to the user-defined target pressure; thereby achieving and/or maintaining the user-defined target pressure.

12. The pressure adjusting device (10) according to claim 11, wherein the controller (105) adjusts the measured air pressure in the tire cavity (11) to the user-defined target pressure with a resolution equal to or finer than 3 psi.

13. The pressure adjusting device (10) according to claim 12 wherein the user-defined target pressure deviates by more than or equal to 3 psi from the measured air pressure in the tire cavity (11).

14. A remote device (30) for communicating with the pressure adjusting device (10) according to any of the claims 10 to 13, wherein the remote device (30) comprises:
- a user interface (31) configured to receive the user-defined target pressure for the tire cavity (11);
- a signal generator configured to generate one or more control signals comprising the user-defined target pressure; and
- a transmitting unit configured to transmit the one or more control signals to the communication interface (111).

15. A pressure adjusting system (40) for adjusting air pressure in air-inflatable tires (20) of a vehicle (21), each air-inflatable tire (20) defining a tire cavity (11) when being mounted on a wheel of the vehicle (21); wherein the pressure adjusting system (40) comprises:
- at least one of the pressure adjusting device (10) according to any of the claims 10 to 13; and
- the remote device (30) according to claim 14;
and wherein the transmitting unit of the remote device (30) is further configured to transmit the one or more control signals to each respective communication interface (111) of the at least one pressure adjusting devices (10).
